# EUROPEAN PATENT SPECIFICATION

(11) **EP 4 233 332 B1**
(45) Date of publication and mention of the grant of the patent: **04.11.2026**
(21) Application number: 21773065.4
(22) Date of filing: 03.09.2021
(51) Int. Cl.: H04L 9/40, H04W 12/02, H04W 88/04, H04W 8/26

(54) **METHOD AND APPARATUS FOR RELAY COMMUNICATION**
VERFAHREN UND VORRICHTUNG FÜR RELAISKOMMUNIKATION
PROCÉDÉ ET APPAREIL DE COMMUNICATION À RELAIS

(30) Priority: 20.10.2020 WO PCT/EP2020/079484
(43) Date of publication of application: 30.08.2023
(73) Proprietor: Telefonaktiebolaget LM Ericsson (publ), 164 83 Stockholm (SE)
(72) Inventor: WANG, Min, 977 53 Lulea (SE)
(74) Representative: Ericsson
(86) International application number: PCT/EP2021/074404
(87) International publication number: WO 2022/083930

(56) References cited:
- US-A1- 2018 287 689
- HUAWEI ET AL: "Study aspects of UE-to-Network relay and solutions for L2 relay", vol. RAN WG2, no. Online; 20200817 - 20200828, 7 August 2020 (2020-08-07), XP051912666, Retrieved from the Internet <URL:https://ftp.3gpp.org/tsg_ran/WG2_RL2/TSGR2_111-e/Docs/R2-2008047.zip> [retrieved on 20200807]
- ERICSSON: "UP aspects for Layer 2 SL relay", vol. RAN WG2, no. Electronic meeting; 20210816, 5 August 2021 (2021-08-05), XP052032308, Retrieved from the Internet <URL:https://ftp.3gpp.org/tsg_ran/WG2_RL2/TSGR2_115-e/Docs/R2-2107470.zip> [retrieved on 20210805]

## Description

### FIELD OF THE INVENTION

The present disclosure generally relates to communication networks, and more specifically, to a method and apparatus for relay communication.

### BACKGROUND

US 2018/287689 relates to a method for performing management of local id identifying a remote UE in a relay UE in wireless communication system and a device therefore. "Study aspects of UE-to-Network relay and solutions for L2 relay" discusses the framework of L2 UE-to-Network relay.

This section introduces aspects that may facilitate a better understanding of the disclosure. Accordingly, the statements of this section are to be read in this light and are not to be understood as admissions about what is in the prior art or what is not in the prior art.

Communication service providers and network operators have been continually facing challenges to deliver value and convenience to consumers by, for example, providing compelling network services and performance. With the evolution of wireless communication, a requirement for supporting device-to-device (D2D) communication features in various applications is proposed. An extension for the D2D work may consist of supporting vehicle-to-everything (V2X) communication, which may include any combination of direct communications among vehicles, pedestrians and infrastructure. Wireless communication networks such as fourth generation (4G)/long term evolution (LTE) and fifth generation (5G)/new radio (NR) networks may be expected to use V2X services and support communication for V2X capable user equipment (UE).

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

In a wireless communication network, direct unicast transmission over a sidelink (SL) between two V2X capable UEs may be needed in some applications such as platooning, cooperative driving, dynamic ride sharing, etc. For a remote UE in the network (NW), e.g., a UE that may be out of cell coverage and may not be able to connect with a network node directly, a UE-to-NW relay UE (also called U2N relay for short) may provide the functionality to support connectivity to the NW for the remote UE. In this case, uplink/downlink (UL/DL) traffics of the remote UE may be forwarded by the U2N relay. In some cases, the remote UE may communicate with another UE via one or more UE-to-UE relay UEs (also called U2U relays for short), and various traffics of the remote UE may be forwarded by the one or more U2U relays. For layer 2 (L2) based relay communication, a remote UE identity (ID) may be carried in an adaptation layer header and known by a relay UE and a destination node (e.g., a network node or a peer remote UE). Since there may be no security protection to the adaptation layer header, it may be possible that the remote UE ID is disclosed and misused during transmissions between the remote UE and the destination node. Therefore, it may be desirable to manage the remote UE ID for relay communication in a more efficient way.

Various exemplary embodiments of the present disclosure propose a solution for relay communication. According to the proposed solution, a base station, a relay UE or a remote UE may configure/reconfigure an identity/identifier (ID) for an adaptation layer with respect to the remote UE. In response to reconfiguration of a UE ID for the adaptation layer, various nodes involved in the relay communication (e.g., the remote UE, one or more relay UEs, the base station, etc.) may be able to update an adaptation layer header of a data unit (e.g., a protocol data unit (PDU), etc.) for the remote UE adaptively and flexibly, so as to avoid misbehaviors of the various nodes on ID handling.

It can be appreciated that the "remote UE" described in this document may refer to a UE that may communicate with a relay UE e.g. via PC5/SL interface, and/or communicate with a network node e.g. via Uu interface. As an example, the remote UE may be a 5G proximity-based services (ProSe) enabled UE that may communicate with a data network (DN) via a ProSe 5G UE-to-NW relay UE. As another example, the remote UE may be a 5G ProSe enabled UE that may communicate with another UE via a ProSe 5G UE-to-UE relay UE.

It can be appreciated that the "relay UE" described in this document may refer to the "UE-to-NW relay UE" or the "UE-to-UE relay UE". As an example, the relay UE may be a 5G ProSe enabled UE that is capable of supporting connectivity to the NW and/or other UE(s) for the remote UE.

It can be appreciated that the "UE-to-NW relay UE" described in this document may also be referred to as "UE-to-Network relay UE", "UE-to-Network relay" and "UE-to-NW relay". Thus, the terms "UE-to-NW relay UE", "UE-to-Network relay UE", "UE-to-Network relay" and "UE-to-NW relay" may be used interchangeably in this document.

Similarly, it can be appreciated that the "UE-to-UE relay UE" described in this document may also be referred to as "UE-to-UE relay". Thus, the terms "UE-to-UE relay UE" and "UE-to-UE relay" may be used interchangeably in this document.

In addition, it can be appreciated that for L2 UE-to-NW relay the term "adaptation layer" described in this document may refer to a protocol layer which is put over a radio link control layer (RLC) sub-layer for both control plane (CP) and user plane (UP) between a relay UE and a gNB. It can be realized that an adaptation layer may be supported over a link between a relay UE and receiving remote UE (e.g., a PC5 link) for L2 UE-to-UE relay. Thus, for L2 UE-to-UE relay the term "adaptation layer" described in this document may refer to a protocol layer which is put over a RLC sub-layer for both CP and UP between a relay UE and a remote UE. It also can be appreciated that "adaptation layer" is just an exemplary name for such protocol layer, and other proper names or terms may also be used for this kind of protocol layer in various applications and implementations.

According to a first aspect of the present disclosure, there is provided a method performed by a terminal device such as a remote UE. The method comprises: obtaining configuration information of the terminal device. The configuration information may indicate that a first identifier of the terminal device for an adaptation layer is to be reconfigured to a second identifier of the terminal device for the adaptation layer. In accordance with an exemplary embodiment, the method further comprises: determining whether to update the first identifier of the terminal device for a data unit (e.g., a protocol data unit (PDU), etc.) to the second identifier.

In accordance with an exemplary embodiment, the first identifier of the terminal device for the data unit may be included in an adaptation layer header of the data unit.

In accordance with an exemplary embodiment, obtaining the configuration information of the terminal device may comprise: generating the configuration information of the terminal device by the terminal device.

In accordance with an exemplary embodiment, obtaining the configuration information of the terminal device may comprise: receiving the configuration information of the terminal device from a first node.

In accordance with an exemplary embodiment, the first node may be a base station (e.g., a gNB, etc.). The configuration information of the terminal device may be generated by the base station or a relay capable UE (e.g., a UE-to-NW relay UE, etc.).

In accordance with an exemplary embodiment, the first node may be a relay capable UE (e.g., a UE-to-NW relay UE, etc.). The configuration information of the terminal device may be generated by the relay capable UE, a base station or another relay capable UE.

In accordance with an exemplary embodiment, the method according to the first aspect of the present disclosure may further comprise: transmitting the configuration information of the terminal device to a relay capable UE and/or a base station.

In accordance with an exemplary embodiment, the configuration information of the terminal device may be distributed to each intermediate node on an end-to-end path of the terminal device.

In accordance with an exemplary embodiment, the terminal device may determine to update the first identifier of the terminal device for the data unit to the second identifier, when the data unit is not being transmitted or retransmitted by the terminal device.

In accordance with an exemplary embodiment, the terminal device may determine not to update the first identifier of the terminal device for the data unit to the second identifier, when the data unit is being transmitted or retransmitted by the terminal device.

In accordance with an exemplary embodiment, the data unit is being transmitted or retransmitted to a second node (e.g., a relay capable UE or a base station, etc.) by the terminal device, and the method may further comprise: receiving an acknowledgement from the second node. The acknowledgement may indicate that at least part of the data unit is decoded successfully by the second node.

In accordance with an exemplary embodiment, the terminal device may determine, based on the acknowledgement, to update the first identifier of the terminal device for the data unit to the second identifier.

In accordance with an exemplary embodiment, the configuration information of the terminal device may further indicate an execution time when to update the first identifier of the terminal device for the data unit to the second identifier.

In accordance with an exemplary embodiment, the terminal device may determine to update the first identifier of the terminal device for the data unit to the second identifier before the execution time.

In accordance with an exemplary embodiment, the terminal device may determine to immediately update the first identifier of the terminal device for the data unit to the second identifier, after processing the configuration information.

In accordance with an exemplary embodiment, the terminal device may determine to update the first identifier of the terminal device for the data unit to the second identifier, after transmitting all pending data units which contain the first identifier of the terminal device for the adaptation layer.

In accordance with an exemplary embodiment, the method according to the first aspect of the present disclosure may further comprise: transmitting or retransmitting the data unit to a third node (e.g., a relay capable UE or a base station, etc.). In this case, the first identifier of the terminal device for the data unit may be updated to the second identifier, and the second identifier of the terminal device may be known by the third node.

In accordance with an exemplary embodiment, the method according to the first aspect of the present disclosure may further comprise: determining capability information of the terminal device. The capability information may indicate: whether the terminal device supports reconfiguration of an identifier of the terminal device for the adaptation layer, and/or whether the terminal device supports to be configured with a local identifier for the adaptation layer.

In accordance with an exemplary embodiment, the method according to the first aspect of the present disclosure may further comprise: transmitting the capability information of the terminal device to a base station and/or a relay capable UE.

According to a second aspect of the present disclosure, there is provided an apparatus which may be implemented as a terminal device. The apparatus may comprise one or more processors and one or more memories storing computer program codes. The one or more memories and the computer program codes may be configured to, with the one or more processors, cause the apparatus at least to perform any step of the method according to the first aspect of the present disclosure.

According to a third aspect of the present disclosure, there is provided a computer-readable medium having computer program codes embodied thereon which, when executed on a computer, cause the computer to perform any step of the method according to the first aspect of the present disclosure.

According to a fourth aspect of the present disclosure, there is provided an apparatus which may be implemented as a terminal device. The apparatus may comprise an obtaining unit and a determining unit. **In** accordance with some exemplary embodiments, the obtaining unit may be operable to carry out at least the obtaining step of the method according to the first aspect of the present disclosure. The determining unit may be operable to carry out at least the determining step of the method according to the first aspect of the present disclosure.

According to a fifth aspect of the present disclosure, there is provided a method performed by a first node (e.g., a relay capable UE, a base station, etc.). The method comprises: obtaining configuration information of a terminal device. The configuration information may indicate that a first identifier of the terminal device for an adaptation layer is to be reconfigured to a second identifier of the terminal device for the adaptation layer. In accordance with an exemplary embodiment, the method further comprises: determining whether to update the first identifier of the terminal device for a data unit to the second identifier.

In accordance with an exemplary embodiment, the first identifier of the terminal device for the data unit may be included in an adaptation layer header of the data unit.

In accordance with an exemplary embodiment, obtaining the configuration information of the terminal device may comprise: generating the configuration information of the terminal device by the first node.

In accordance with an exemplary embodiment, the first node may be a base station or a relay capable UE.

In accordance with an exemplary embodiment, obtaining the configuration information of the terminal device may comprise: receiving the configuration information of the terminal device from a fourth node.

In accordance with an exemplary embodiment, the first node may be a relay capable UE, and the fourth node may be a base station, the terminal device or another relay capable UE. In this case, the configuration information of the terminal device may be generated by the base station, the terminal device or the another relay capable UE.

In accordance with an exemplary embodiment, the first node may be a base station, and the fourth node may be the terminal device or a relay capable UE. In this case, the configuration information of the terminal device may be generated by the terminal device or the relay capable UE.

In accordance with an exemplary embodiment, the method according to the fifth aspect of the present disclosure may further comprise: transmitting the configuration information of the terminal device to the terminal device, a base station and/or a relay capable UE.

In accordance with an exemplary embodiment, the configuration information of the terminal device may be distributed to each intermediate node on an end-to-end path of the terminal device.

In accordance with an exemplary embodiment, the method according to the fifth aspect of the present disclosure may further comprise: keeping the first identifier and the second identifier of the terminal device for a predetermined period of time.

In accordance with an exemplary embodiment, the first node may determine to update the first identifier of the terminal device for the data unit to the second identifier, when the data unit is not being transmitted or retransmitted by the first node.

In accordance with an exemplary embodiment, the first node may determine not to update the first identifier of the terminal device for the data unit to the second identifier, when the data unit is being transmitted or retransmitted by the first node.

In accordance with an exemplary embodiment, the data unit is being transmitted or retransmitted to a fifth node (e.g., a remote UE, a relay capable UE or a base station, etc.) by the first node, and the method may further comprise: receiving an acknowledgement from the fifth node. The acknowledgement may indicate that at least part of the data unit is decoded successfully by the fifth node.

In accordance with an exemplary embodiment, the first node may determine, based on the acknowledgement, to update the first identifier of the terminal device for the data unit to the second identifier.

In accordance with an exemplary embodiment, the configuration information of the terminal device may further indicate an execution time when to update the first identifier of the terminal device for the data unit to the second identifier.

In accordance with an exemplary embodiment, the first node may determine to update the first identifier of the terminal device for the data unit to the second identifier before the execution time.

In accordance with an exemplary embodiment, the first node may determine to immediately update the first identifier of the terminal device for the data unit to the second identifier, after processing the configuration information.

In accordance with an exemplary embodiment, the first node may determine to update the first identifier of the terminal device for the data unit to the second identifier, after transmitting all pending data units which contain the first identifier of the terminal device for the adaptation layer.

In accordance with an exemplary embodiment, the method according to the fifth aspect of the present disclosure may further comprise: transmitting or retransmitting the data unit to a sixth node (e.g., a remote UE, a relay capable UE or a base station, etc.). In this case, the first identifier of the terminal device for the data unit may be updated to the second identifier, and the second identifier of the terminal device may be known by the sixth node.

In accordance with an exemplary embodiment, the method according to the fifth aspect of the present disclosure may further comprise: receiving capability information of the terminal device from the terminal device. The capability information may indicate: whether the terminal device supports reconfiguration of an identifier of the terminal device for the adaptation layer, and/or whether the terminal device supports to be configured with a local identifier for the adaptation layer.

According to a sixth aspect of the present disclosure, there is provided an apparatus which may be implemented as a first node. The apparatus may comprise one or more processors and one or more memories storing computer program codes. The one or more memories and the computer program codes may be configured to, with the one or more processors, cause the apparatus at least to perform any step of the method according to the fifth aspect of the present disclosure.

According to a seventh aspect of the present disclosure, there is provided a computer-readable medium having computer program codes embodied thereon which, when executed on a computer, cause the computer to perform any step of the method according to the fifth aspect of the present disclosure.

According to an eighth aspect of the present disclosure, there is provided an apparatus which may be implemented as a first node. The apparatus may comprise an obtaining unit and a determining unit. In accordance with some exemplary embodiments, the obtaining unit may be operable to carry out at least the obtaining step of the method according to the fifth aspect of the present disclosure. The determining unit may be operable to carry out at least the determining step of the method according to the fifth aspect of the present disclosure.

According to a ninth aspect of the present disclosure, there is provided a method implemented in a communication system which may include a host computer, a base station and a UE. The method may comprise providing user data at the host computer. Optionally, the method may comprise, at the host computer, initiating a transmission carrying the user data to the UE via a cellular network comprising the base station which may perform any step of the method according to the fifth aspect of the present disclosure.

According to a tenth aspect of the present disclosure, there is provided a communication system including a host computer. The host computer may comprise processing circuitry configured to provide user data, and a communication interface configured to forward the user data to a cellular network for transmission to a UE. The cellular network may comprise a base station having a radio interface and processing circuitry. The base station's processing circuitry may be configured to perform any step of the method according to the fifth aspect of the present disclosure.

According to an eleventh aspect of the present disclosure, there is provided a method implemented in a communication system which may include a host computer, a base station and a UE. The method may comprise providing user data at the host computer. Optionally, the method may comprise, at the host computer, initiating a transmission carrying the user data to the UE via a cellular network comprising the base station. The UE may perform any step of the method according to the first aspect of the present disclosure.

According to a twelfth aspect of the present disclosure, there is provided a communication system including a host computer. The host computer may comprise processing circuitry configured to provide user data, and a communication interface configured to forward user data to a cellular network for transmission to a UE. The UE may comprise a radio interface and processing circuitry. The UE's processing circuitry may be configured to perform any step of the method according to the first aspect of the present disclosure.

According to a thirteenth aspect of the present disclosure, there is provided a method implemented in a communication system which may include a host computer, a base station and a UE. The method may comprise, at the host computer, receiving user data transmitted to the base station from the UE which may perform any step of the method according to the first aspect of the present disclosure.

According to a fourteenth aspect of the present disclosure, there is provided a communication system including a host computer. The host computer may comprise a communication interface configured to receive user data originating from a transmission from a UE to a base station. The UE may comprise a radio interface and processing circuitry. The UE's processing circuitry may be configured to perform any step of the method according to the first aspect of the present disclosure.

According to a fifteenth aspect of the present disclosure, there is provided a method implemented in a communication system which may include a host computer, a base station and a UE. The method may comprise, at the host computer, receiving, from the base station, user data originating from a transmission which the base station has received from the UE. The base station may perform any step of the method according to the fifth aspect of the present disclosure.

According to a sixteenth aspect of the present disclosure, there is provided a communication system which may include a host computer. The host computer may comprise a communication interface configured to receive user data originating from a transmission from a UE to a base station. The base station may comprise a radio interface and processing circuitry. The base station's processing circuitry may be configured to perform any step of the method according to the fifth aspect of the present disclosure.

### BRIEF DESCRIPTION OF THE DRAWINGS

The disclosure itself, the preferable mode of use and further objectives are best understood by reference to the following detailed description of the embodiments when read in conjunction with the accompanying drawings, in which:
Fig.1 is a diagram illustrating an exemplary NR physical resource grid according to an embodiment of the present disclosure;
Fig.2A is a diagram illustrating an exemplary user plane stack for layer-2 (L2) UE-to-Network relay according to an embodiment of the present disclosure;
Fig.2B is a diagram illustrating an exemplary control plane stack for L2 UE-to-Network relay according to an embodiment of the present disclosure;
Fig.3 is a diagram illustrating exemplary connection establishment for indirect communication via a UE-to-Network relay according to an embodiment of the present disclosure;
Fig.4 is a flowchart illustrating a method according to some embodiments of the present disclosure;
Fig.5 is a flowchart illustrating another method according to some embodiments of the present disclosure;
Figs.6A-6B are block diagrams illustrating various apparatuses according to some embodiments of the present disclosure;
Fig.7 is a block diagram illustrating a telecommunication network connected via an intermediate network to a host computer in accordance with some embodiments of the present disclosure;
Fig.8 is a block diagram illustrating a host computer communicating via a base station with a UE over a partially wireless connection in accordance with some embodiments of the present disclosure;
Fig.9 is a flowchart illustrating a method implemented in a communication system, in accordance with an embodiment of the present disclosure;
Fig.10 is a flowchart illustrating a method implemented in a communication system, in accordance with an embodiment of the present disclosure;
Fig.11 is a flowchart illustrating a method implemented in a communication system, in accordance with an embodiment of the present disclosure; and
Fig.12 is a flowchart illustrating a method implemented in a communication system, in accordance with an embodiment of the present disclosure.

### DETAILED DESCRIPTION

The embodiments of the present disclosure are described in detail with reference to the accompanying drawings. It should be understood that these embodiments are discussed only for the purpose of enabling those skilled persons in the art to better understand and thus implement the present disclosure, rather than suggesting any limitations on the scope of the present disclosure. Reference throughout this specification to features, advantages, or similar language does not imply that all of the features and advantages that may be realized with the present disclosure should be or are in any single embodiment of the disclosure. Rather, language referring to the features and advantages is understood to mean that a specific feature, advantage, or characteristic described in connection with an embodiment is included in at least one embodiment of the present disclosure. Furthermore, the described features, advantages, and characteristics of the disclosure may be combined in any suitable manner in one or more embodiments. One skilled in the relevant art will recognize that the disclosure may be practiced without one or more of the specific features or advantages of a particular embodiment. In other instances, additional features and advantages may be recognized in certain embodiments that may not be present in all embodiments of the disclosure.

As used herein, the term "communication network" refers to a network following any suitable communication standards, such as new radio (NR), long term evolution (LTE), LTE-Advanced, wideband code division multiple access (WCDMA), high-speed packet access (HSPA), and so on. Furthermore, the communications between a terminal device and a network node in the communication network may be performed according to any suitable generation communication protocols, including, but not limited to, the first generation (1G), the second generation (2G), 2.5G, 2.75G, the third generation (3G), 4G, 4.5G, 5G communication protocols, and/or any other protocols either currently known or to be developed in the future.

The term "network node" refers to a network device in a communication network via which a terminal device accesses to the network and receives services therefrom. The network node may refer to a base station (BS), an access point (AP), a multi-cell/multicast coordination entity (MCE), a controller or any other suitable device in a wireless communication network. The BS may be, for example, a node B (NodeB or NB), an evolved NodeB (eNodeB or eNB), a next generation NodeB (gNodeB or gNB), a remote radio unit (RRU), a radio header (RH), a remote radio head (RRH), a relay, a low power node such as a femto, a pico, and so forth.

Yet further examples of the network node comprise multi-standard radio (MSR) radio equipment such as MSR BSs, network controllers such as radio network controllers (RNCs) or base station controllers (BSCs), base transceiver stations (BTSs), transmission points, transmission nodes, positioning nodes and/or the like. More generally, however, the network node may represent any suitable device (or group of devices) capable, configured, arranged, and/or operable to enable and/or provide a terminal device access to a wireless communication network or to provide some service to a terminal device that has accessed to the wireless communication network.

The term "terminal device" refers to any end device that can access a communication network and receive services therefrom. By way of example and not limitation, the terminal device may refer to a mobile terminal, a user equipment (UE), or other suitable devices. The UE may be, for example, a subscriber station, a portable subscriber station, a mobile station (MS) or an access terminal (AT). The terminal device may include, but not limited to, portable computers, image capture terminal devices such as digital cameras, gaming terminal devices, music storage and playback appliances, a mobile phone, a cellular phone, a smart phone, a tablet, a wearable device, a personal digital assistant (PDA), a vehicle, and the like.

As yet another specific example, in an Internet of things (IoT) scenario, a terminal device may also be called an IoT device and represent a machine or other device that performs monitoring, sensing and/or measurements etc., and transmits the results of such monitoring, sensing and/or measurements etc. to another terminal device and/or a network equipment. The terminal device may in this case be a machine-to-machine (M2M) device, which may in a 3rd generation partnership project (3GPP) context be referred to as a machine-type communication (MTC) device.

As one particular example, the terminal device may be a UE implementing the 3GPP narrow band Internet of things (NB-IoT) standard. Particular examples of such machines or devices are sensors, metering devices such as power meters, industrial machinery, or home or personal appliances, e.g. refrigerators, televisions, personal wearables such as watches etc. In other scenarios, a terminal device may represent a vehicle or other equipment, for example, a medical instrument that is capable of monitoring, sensing and/or reporting etc. on its operational status or other functions associated with its operation.

As used herein, the terms "first", "second" and so forth refer to different elements. The singular forms "a" and "an" are intended to include the plural forms as well, unless the context clearly indicates otherwise. The terms "comprises", "comprising", "has", "having", "includes" and/or "including" as used herein, specify the presence of stated features, elements, and/or components and the like, but do not preclude the presence or addition of one or more other features, elements, components and/or combinations thereof. The term "based on" is to be read as "based at least in part on". The term "one embodiment" and "an embodiment" are to be read as "at least one embodiment". The term "another embodiment" is to be read as "at least one other embodiment". Other definitions, explicit and implicit, may be included below.

Wireless communication networks are widely deployed to provide various telecommunication services such as voice, video, data, messaging and broadcasts. To meet dramatically increasing network requirements on traffic capacity and data rates, one interesting option for communication technique development is to allow D2D communications to be implemented in a wireless communication network such as 4G/LTE or 5G/NR network. As used herein, D2D may be referred to in a broader sense to include communications between any types of UEs, and include V2X communications between a vehicle UE and any other type of UE. D2D and/or V2X may be a component of many existing wireless technologies when it comes to direct communication between wireless devices. D2D and/or V2X communications as an underlay to cellular networks may be proposed as an approach to take advantage of the proximity of devices.

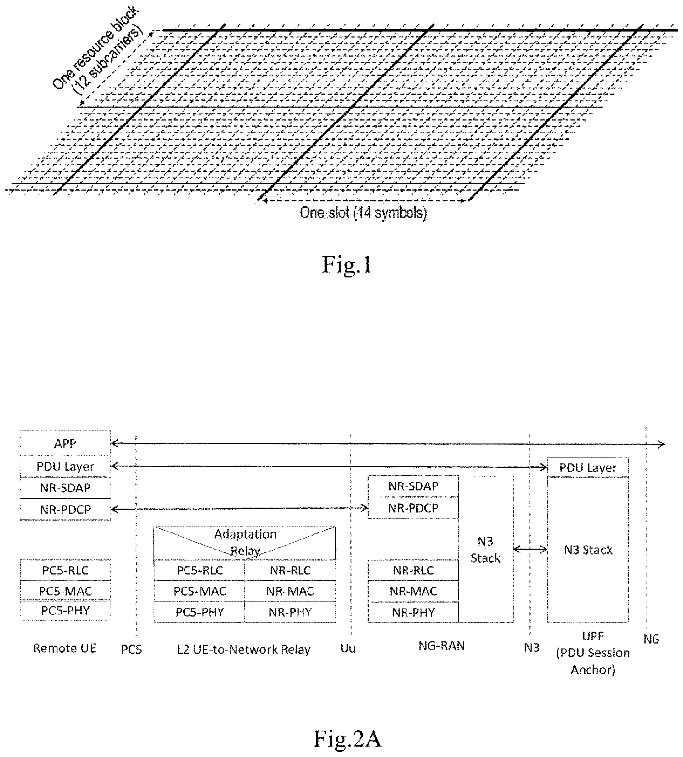

Fig.1 is a diagram illustrating an exemplary NR physical resource grid according to an embodiment of the present disclosure. Similar to LTE, NR may use orthogonal frequency division multiplexing (OFDM) in the downlink (i.e., from a network node such as a base station, a gNB, an eNB, etc. to a terminal device such as a UE). The basic NR physical resource over an antenna port can thus be seen as a time-frequency grid as illustrated in Fig.1, where a resource block (RB) in a 14-symbol slot is shown. A resource block may correspond to 12 contiguous subcarriers in the frequency domain. Resource blocks may be numbered in the frequency domain, starting with 0 from one end of the system bandwidth. Each resource element may correspond to one OFDM subcarrier during one OFDM symbol interval.

Different subcarrier spacing values may be supported in NR. The supported subcarrier spacing values (also referred to as different numerologies) may be given by Δf=(15×2^µ) kHz, where *µ* ∈ (0,1, 2, 3, 4), and Δf=15kHz is the basic (or reference) subcarrier spacing that may also be used in LTE.

In the time domain, downlink and uplink transmissions in NR may be organized into equally-sized subframes of 1ms each similar to LTE. A subframe may be further divided into multiple slots of equal duration. The slot length for subcarrier spacing Δf=(15×2^µ) kHz is 1/2^µ ms. There is only one slot per subframe for Δf=15kHz and a slot consists of 14 OFDM symbols.

Downlink transmissions may be dynamically scheduled, e.g., in each slot a gNB may transmit downlink control information (DCI) about which UE data is to be transmitted to and which resource block(s) in the current downlink slot the data is transmitted on. This kind of control information may be typically transmitted in the first one or two OFDM symbols in each slot in NR. The control information may be carried on the physical downlink control channel (PDCCH) and data may be carried on the physical downlink shared channel (PDSCH). A UE may first detect and decode a PDCCH and if the PDCCH is decoded successfully, then the UE may decode the corresponding PDSCH based on the downlink assignment provided by the decoded control information in the PDCCH. In addition to the PDCCH and the PDSCH, there may also be other channels and reference signals transmitted in the downlink, e.g., including a synchronization signal block (SSB), a channel state information-reference signal (CSI-RS), etc.

Uplink data transmissions, carried on physical uplink shared channel (PUSCH), may also be dynamically scheduled by the gNB by transmitting DCI. The DCI (which is transmitted in the DL region) may always indicate a scheduling time offset so that the PUSCH is transmitted in a slot in the UL region.

Sidelink transmissions over NR are specified by 3GPP for Release 16. These are some enhancements of the ProSe specified for LTE. As an example, four new enhancements are particularly introduced to NR sidelink transmissions as follows:
- Support for unicast and groupcast transmissions are added in NR sidelink. For unicast and groupcast, the physical sidelink feedback channel (PSFCH) is introduced for a receiver UE to reply the decoding status to a transmitter UE.
- Grant-free transmissions, which are adopted in NR uplink transmissions, are also provided in NR sidelink transmissions, to improve the latency performance.
- To alleviate resource collisions among different sidelink transmissions launched by different UEs, it enhances channel sensing and resource selection procedures, which also lead to a new design of physical sidelink common control channel (PSCCH).
- To achieve a high connection density, congestion control and thus the quality of service (QoS) management is supported in NR sidelink transmissions.

In order to enable the above enhancements, some new physical channels and reference signals may be introduced in NR (available in LTE before) as follows:
- Physical Sidelink Shared Channel (PSSCH, SL version of PDSCH): The PSSCH may be transmitted by a sidelink transmitter UE, which may convey sidelink transmission data, system information blocks (SIBs) for radio resource control (RRC) configuration, and a part of the sidelink control information (SCI).
- Physical Sidelink Feedback Channel (PSFCH, SL version of physical uplink control channel (PUCCH)): The PSFCH may be transmitted by a sidelink receiver UE for unicast and groupcast, which may convey 1 bit information over 1 RB for the hybrid automatic repeat request (HARQ) acknowledgement (ACK) and the negative ACK (NACK). In addition, channel state information (CSI) may be carried in the medium access control (MAC) control element (CE) over the PSSCH instead of the PSFCH.
- Physical Sidelink Common Control Channel (PSCCH, SL version of PDCCH): When the traffic to be sent to a receiver UE arrives at a transmitter UE, a transmitter UE may first send the PSCCH, which may convey a part of sidelink control information (SCI, SL version of DCI) to be decoded by any UE for the channel sensing purpose, including the reserved time-frequency resources for transmissions, demodulation reference signal (DMRS) pattern and antenna port, etc.
- Sidelink Primary/Secondary Synchronization Signal (S-PSS/S-SSS): Similar to downlink transmissions in NR, in sidelink transmissions, primary and secondary synchronization signals (called S-PSS and S-SSS, respectively) may be supported. Through detecting the S-PSS and S-SSS, a UE may be able to identify the sidelink synchronization identity (SSID) from the UE sending the S-PSS/S-SSS. Through detecting the S-PSS/S-SSS, a UE may be therefore able to know the characteristics of the UE transmitting the S-PSS/S-SSS. A series of processes of acquiring timing and frequency synchronization together with SSIDs of UEs may be called initial cell search. It can be appreciated that the UE sending the S-PSS/S-SSS may not be necessarily involved in sidelink transmissions, and a node (e.g., a UE/eNB/gNB) sending the S-PSS/S-SSS may be called a synchronization source. There may be 2 S-PSS sequences and 336 S-SSS sequences forming a total of 672 SSIDs in a cell.
- Physical Sidelink Broadcast Channel (PSBCH): The PSBCH may be transmitted along with the S-PSS/S-SSS as a synchronization signal/PSBCH block (SSB). The SSB may have the same numerology as PSCCH/PSSCH on that carrier, and an SSB may be transmitted within the bandwidth of the configured bandwidth part (BWP). The PSBCH may convey information related to synchronization, such as the direct frame number (DFN), an indication of the slot and symbol level time resources for sidelink transmissions, an in-coverage indicator, etc. The SSB may be transmitted periodically at every 160 ms.
- DMRS, phase tracking-reference signal (PT-RS), CSI-RS: These physical reference signals supported by NR downlink/uplink transmissions may also be adopted by sidelink transmissions. Similarly, the PT-RS may be only applicable for frequency range 2 (FR2) transmission.

Another new feature is the two-stage SCI, which is a version of the DCI for SL. Unlike the DCI, only part (first stage) of the SCI may be sent on the PSCCH. This part may be used for channel sensing purposes (including the reserved time-frequency resources for transmissions, DMRS pattern and antenna port, etc.) and can be read by all UEs while the remaining (second stage) scheduling and control information such as a 8-bits source identity (ID) and a 16-bits destination ID, new data indicator (NDI), redundancy version (RV) and HARQ process ID may be sent on the PSSCH to be decoded by the receiver UE.

Similar as for ProSe in LTE, NR sidelink transmissions may have the following two modes of resource allocations:
- Mode 1: Sidelink resources are scheduled by a gNB.
- Mode 2: The UE autonomously selects sidelink resources from a (pre-)configured sidelink resource pool(s) based on the channel sensing mechanism.

For the in-coverage UE, a gNB may be configured to adopt Mode 1 or Mode 2. For the out-of-coverage UE, only Mode 2 may be adopted.

As in LTE, scheduling over the sidelink in NR may be done in different ways for Mode 1 and Mode 2. In accordance with an exemplary embodiment, Mode 1 may support the following two kinds of grants:
- Dynamic grant: When the traffic to be sent over sidelink arrives at a transmitter UE, this UE may launch the four-message exchange procedure to request sidelink resources from a gNB (e.g., a scheduling request (SR) on UL, a grant, a buffer status report (BSR) on UL, a grant for data on SL sent to UE). During the resource request procedure, the gNB may allocate a sidelink radio network temporary identifier (SL-RNTI) to the transmitter UE. If this sidelink resource request is granted by the gNB, then the gNB may indicate the resource allocation for the PSCCH and the PSSCH in the DCI conveyed by PDCCH with cyclic redundancy check (CRC) scrambled with the SL-RNTI. When the transmitter UE receives such DCI, the transmitter UE can obtain the grant only if the scrambled CRC of DCI can be successfully solved by the assigned SL-RNTI. The transmitter UE then may indicate the time-frequency resources and the transmission scheme of the allocated PSSCH in the PSCCH, and launch the PSCCH and the PSSCH on the allocated resources for sidelink transmissions. When a grant is obtained from the gNB, the transmitter UE can only transmit a single transport block (TB). As a result, this kind of grant may be suitable for traffic with a loose latency requirement.
- Configured grant: For the traffic with a strict latency requirement, performing the four-message exchange procedure to request sidelink resources may induce unacceptable latency. In this case, prior to the traffic arrival, a transmitter UE may perform the four-message exchange procedure and request a set of resources. If a grant can be obtained from a gNB, then the requested resources may be reserved in a periodic manner. Upon traffic arriving at the transmitter UE, this UE may launch the PSCCH and the PSSCH on the upcoming resource occasion. In fact, this kind of grant is also known as grant-free transmissions.

In both dynamic grant and configured grant, a sidelink receiver UE may not receive the DCI (since it is addressed to the transmitter UE), and therefore the receiver UE may perform blind decoding to identify the presence of PSCCH and find the resources for the PSSCH through the SCI. In an embodiment, when the transmitter UE launches the PSCCH, CRC may also be inserted in the SCI without any scrambling.

In the Mode 2 resource allocation, when traffic arrives at a transmitter UE, this transmitter UE may autonomously select resources for the PSCCH and the PSSCH. To further minimize the latency of the feedback HARQ ACK/NACK transmissions and subsequently retransmissions, the transmitter UE may also reserve resources for PSCCH/PSSCH for retransmissions. To further enhance the probability of successful TB decoding at one shot and thus suppress the probability to perform retransmissions, the transmitter UE may repeat the TB transmission along with the initial TB transmission. This mechanism is also known as blind retransmission. As a result, when traffic arrives at the transmitter UE, then this transmitter UE may select resources for the following transmissions:
1) The PSSCH associated with the PSCCH for initial transmission and blind retransmissions.
2) The PSSCH associated with the PSCCH for retransmissions.

Since each transmitter UE in sidelink transmissions may autonomously select resources for above transmissions, how to prevent different transmitter UEs from selecting the same resources turns out to be a critical issue in Mode 2. A particular resource selection procedure may be therefore imposed to Mode 2 based on channel sensing. In an embodiment, a channel sensing algorithm may involve measuring reference signal received power (RSRP) on different sub-channels and require knowledge of the different UEs power levels of DMRS on the PSSCH or the DMRS on the PSCCH depending on the configuration. This kind of information may be known only after receiving SCI launched by (all) other UEs. The sensing and selection algorithm may be rather complex.

There may be some D2D discovery procedures for detection of services and applications offered by other UEs in close proximity. In accordance with an exemplary embodiment, a discovery procedure may have two modes, i.e., mode A based on open announcements (broadcasts) and mode B, which is request/response. The discovery procedure may be controlled by the application layer (ProSe). The discovery message may be sent on the physical sidelink discovery channel (PSDCH) which may not be available in NR. In addition, there may be a specific resource pool for announcement and monitoring of discovery messages. The discovery procedure may be used to detect UEs supporting certain services or applications before initiating direct communication.

In accordance with an exemplary embodiment, a L2 UE-to-Network relay UE may provide forwarding functionality that can relay any type of traffic over the PC5 link, e.g., as described in 3GPP technical report (TR) 23.752 V0.3.0. The L2 UE-to-Network relay UE may provide the functionality to support connectivity to the 5G system (5GS) for remote UEs. A UE may be considered to be a remote UE if it has successfully established a PC5 link to the L2 UE-to-Network relay UE. The remote UE may be located within new generation-radio access network (NG-RAN) coverage or outside of NG-RAN coverage.

Fig.2A is a diagram illustrating an exemplary user plane stack for L2 UE-to-Network relay according to an embodiment of the present disclosure. For simplicity, Fig.2A only depicts exemplary devices/elements, e.g., a remote UE, a L2 UE-to-Network relay, a NG-RAN, and a user plane function (UPF). As an example, the remote UE may have protocol layers including a physical layer on PC5 interface (PC5-PHY), a medium access control layer on PC5 interface (PC5-MAC), a radio link control layer on PC5 interface (PC5-RLC), a packet data convergence protocol layer for NR (NR-PDCP), a service data adaptation protocol layer for NR (NR-SDAP), a protocol data unit (PDU) layer, and an application layer (APP). Fig.2A also shows other network devices/elements with corresponding protocol layers. The protocol stack for the user plane transport may be related to a PDU session. The PDU layer corresponds to the PDU carried between the remote UE and a data network (DN) over the PDU session. The two endpoints of the PDCP link are the remote UE and a gNB in the network. The relay function may be performed below the PDCP layer. This means that data security may be ensured between the remote UE and the gNB without exposing raw data at the UE-to-Network relay.

The adaptation relay layer within the UE-to-Network relay can differentiate between signaling radio bearers (SRBs) and data radio bearers (DRBs) for a particular remote UE. The adaption relay layer may also be responsible for mapping PC5 traffic to one or more DRBs of the Uu interface.

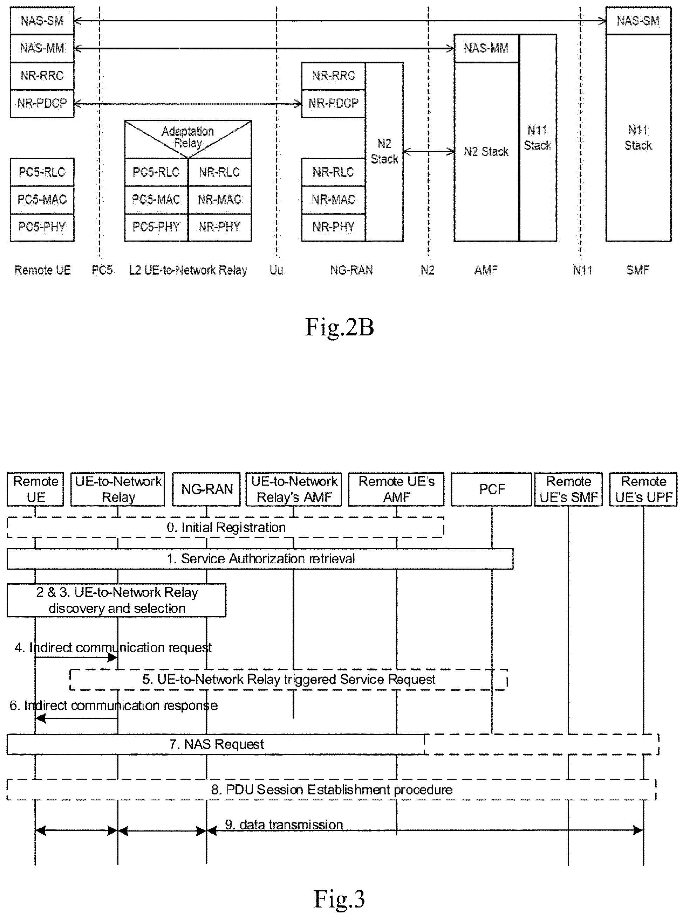

Fig.2B is a diagram illustrating an exemplary control plane stack for L2 UE-to-Network relay according to an embodiment of the present disclosure. The role of the UE-to-Network relay may be to relay the PDUs from the signaling radio bearer without any modifications. The protocol stack as shown in Fig.2B may be applicable to the non-access stratum (NAS) connection for the remote UE to the non-access stratum-mobility management (NAS-MM) and non-access stratum-session management (NAS-SM) components. The NAS messages may be transparently transferred between the remote UE and 5G access network (5G-AN) over the L2 UE-to-Network relay using:
- PDCP end-to-end connection where the role of the UE-to-Network relay is to relay the PDUs over the signaling radio bear without any modifications.
- N2 connection between the 5G-AN and the access and mobility management function (AMF) over N2.
- N3 connection between the AMF and the session management function (SMF) over N11.

Fig.3 is a diagram illustrating exemplary connection establishment for indirect communication via a UE-to-Network relay according to an embodiment of the present disclosure. For simplicity, Fig.3 only depicts exemplary devices or functions, e.g., a remote UE, a UE-to-Network relay, a NG-RAN, a UE-to-Network relay's AMF, a remote UE's AMF, a policy charging function (PCF), a remote UE's SMF and a remote UE's UPF. As shown in Fig.3, the exemplary connection establishment procedure for indirect communication via the UE-to-Network relay may include the following steps:
- Step 0: If in coverage, the remote UE and the UE-to-Network relay may independently perform the initial registration to the network according to registration procedures, e.g., as described in 3GPP TS 23.502 V16.5.0. The allocated 5G globally unique temporary UE identity (GUTI) of the remote UE is maintained when later NAS signaling between the remote UE and the network is exchanged via the UE-to-Network relay. The procedure shown in Fig.3 assumes a single hop relay.
- Step 1: If in coverage, the remote UE and the UE-to-Network relay independently get the service authorization for indirect communication from the network.
- Steps 2-3: The remote UE and the UE-to-Network relay perform UE-to-Network relay UE discovery and selection.
- Step 4: The remote UE initiates a one-to-one communication connection with the selected UE-to-Network relay over PC5, by sending an indirect communication request message to the UE-to-Network relay.
- Step 5: If the UE-to-Network relay is in CM_IDLE state, triggered by the communication request received from the remote UE, the UE-to-Network Relay sends a service request message over PC5 to its serving AMF. The UE-to-Network relay's AMF may perform authentication of the UE-to-Network relay based on NAS message validation and if needed the AMF may check the subscription data. If the UE-to-Network relay is already in CM _CONNECTED state and is authorized to perform relay service, then step 5 may be omitted.
- Step 6: The UE-to-Network relay sends the indirect communication response message to the remote UE.
- Step 7: The remote UE sends a NAS message to the serving AMF. The NAS message may be encapsulated in a radio resource control (RRC) message that is sent over PC5 to the UE-to-Network relay, and the UE-to-Network relay forwards the message to the NG-RAN. The NG-RAN derives the remote UE's serving AMF and forwards the NAS message to this AMF. It is assumed here that the remote UE's public land mobile network (PLMN) is accessible by the UE-to-Network relay's PLMN and that the UE-to-Network relay's AMF supports all single network slice selection assistance information (S-NSSAI) that the remote UE may want to connect to. If the remote UE has not performed the initial registration to the network in step 0, the NAS message is initial registration message. Otherwise, the NAS message is a service request message.
   If the remote UE performs initial registration via the UE-to-Network relay, the remote UE's serving AMF may perform authentication of the remote UE based on NAS message validation and if needed the remote UE's AMF may check the subscription data. For service request case, user plane connection for PDU sessions may also be activated. As an example, the other steps may follow the clause 4.2.3.2 in 3GPP TS 23.502 V16.5.0.
- Step 8: The remote UE may trigger the PDU session establishment procedure, e.g., as described in clause 4.3.2.2 of 3GPP TS 23.502 V16.5.0.
- Step 9: The data is transmitted between the remote UE and the UPF via the UE-to-Network relay and the NG-RAN. The UE-to-Network relay may forward all the data messages between the remote UE and the NG-RAN using RAN specified L2 relay method.

For the single-hop NR sidelink-based relay, study items may focus on many aspects (if applicable) for L3 relay and L2 relay (e.g., sidelink-based UE-to-NW relay and UE-to-UE relay). In an embodiment, the UE-to-NW relay and the UE-to-UE relay may use the same relaying solution. Forward compatibility for multi-hop relay support in the future may also need to be considered, i.e., the relaying solution (e.g., SL based UE-to-NW relay and UE-to-UE relay) may be easily extended to be applicable for multi-hop relay.

As to the L2 relay mechanism, one or more capabilities regarding an adaptation layer may be supported on the second hop (i.e., between a relay UE and a gNB, on the Uu link, for a UE-to-NW relay, or between a relay UE and a receiving remote UE, on the PC5 link, for a UE-to-UE relay). However, whether the adaptation layer is configured on the first hop or not is going to be further studied.

In accordance with an exemplary embodiment, for L2 UE-to-NW relay, the adaptation layer may be put over radio link control (RLC) sublayer for both control plane (CP) and user plane (UP) between a relay UE and a gNB. The Uu SDAP/PDCP and RRC may be terminated between the remote UE and the gNB, while the RLC, MAC and PHY may be terminated in each link. In addition, the remote UE may need to establish its own PDU sessions/data radio bearers (DRBs) with the network before user plane data transmission.

In accordance with an exemplary embodiment, for L2 UE-to-UE relay, an adaptation layer may be supported over PC5 link (e.g., between a relay UE and a receiving remote UE) for L2 UE-to-UE relay. In another embodiment, the adaptation layer may be put over RLC sublayer for both CP and UP between the relay UE and the receiving remote UE for L2 UE-to-UE relay. The sidelink SDAP/PDCP and RRC may be terminated between two remote UEs, while RLC, MAC and PHY may be terminated in each PC5 link.

In accordance with an exemplary embodiment, one or more of the following information contents may be carried in an adaptation layer header for a UE-to-NW relay:
- an identity (ID) of a remote UE known by a gNB and a relay UE (e.g., a remote UE ID or a local ID); and
- an identity of an end-to-end remote UE radio bearer.

In accordance with an exemplary embodiment, one or more of the following information contents may be carried in an adaptation layer header for a UE-to-UE relay:
- an identity of a remote UE known by a peer remote UE and a relay UE (e.g., a remote UE ID or a local ID); and
- an identity of an end-to-end remote UE sidelink radio bearer.

In the above information, the remote UE ID and/or the radio bearer ID may be important information for relay communication. In an embodiment, it may be expected that some sort of UE ID and/or radio bearer ID information may be included in the adaptation layer header. The UE ID may be a formal UE ID or a local ID known by the relay UE and a destination node (e.g., the gNB in case of U2N relay, a receiving remote UE in case U2U relay, etc.).

Since the adaptation layer is below the PDCP layer of the remote UE, based on the existing security mechanism, that is end-to-end at the PDCP layer, there may be no security protection to the adaptation layer header, which means that the UE ID and/or the radio bearer ID of the remote UE may have a risk to be disclosed during transmission between the remote UE and the gNB. In this case, a malicious UE may e.g., initiate an attack against the gNB by initiating a fake RRC connection setup or re-establishment (or basically initiating a fake random access procedure). One simple solution to reduce the risk of disclosure of the UE ID may be to frequently reconfigure the UE ID so that the UE ID is only valid for a short time period. The reconfiguration of the UE ID may be performed by the gNB. When the UE ID is reconfigured, the management of adaptation layer headers of those pending PDUs by the UE may need to be considered. In addition, how to configure and reconfigure a UE ID for the adaptation layer for a concerned remote UE in a relay scenario may also an issue which need to be addressed. Therefore, there may be a need to study the issues and develop corresponding solutions.

Various exemplary embodiments of the present disclosure propose a solution to enable a gNB and/or a UE (e.g., a relay UE, a remote UE, etc.) to configure and/or reconfigure a UE ID for a concerned remote UE. The UE ID may be used in an adaptation layer. In an embodiment, a local ID may be configured/reconfigured to the remote UE. The local ID may be applied for a short time period, which is beneficial to reduce the risk of UE ID disclosure. In addition, various exemplary embodiments may also support adaptive node behaviors on how to manage adaptation layer headers, so as to avoid misbehaviors of nodes on ID handling.

It can be appreciated that although some exemplary embodiments are described in the context of NR, e.g., a remote UE and a relay UE may be deployed in the same NR cell or different NR cells, various embodiments described in the present disclosure may be in general applicable to any kind of communications involving D2D communications. For example, various embodiments described in the present disclosure may also be applicable to other relay scenarios including UE-to-NW relay or UE-to-UE relay where the link between a remote UE and a relay UE may be based on LTE sidelink or NR sidelink, and the Uu connection between a relay UE and a base station may be LTE Uu connection or NR Uu connection. In addition, various embodiments described in the present disclosure may also be applicable to a relay scenario containing multiple relay hops, and/or a relay scenario where a relay UE may be configured with multiple connections (i.e., the number of connections may be equal to or larger than two) to the radio access network (RAN) (e.g., by dual connectivity, carrier aggregation, etc.).

It can be appreciated that the connection between a remote UE and a relay UE may not be limited to sidelink. Any short-range communication technology such as wireless fidelity (WiFi) may also be equally applicable.

In accordance with an exemplary embodiment, upon reconfiguration of UE ID for a concerned remote UE (e.g., by a base station, a relay UE or the remote UE itself), a UE (e.g., the remote UE, the relay UE, etc.) and/or a base station (e.g., a gNB, etc.) may choose at least one of the below options to manage adaptation layer headers of those pending PDUs (e.g., pending at the adaptation layer or the lower layer such as RLC layer).
- Option 1: for those PDUs which are not being transmitted or retransmitted, updating the UE ID field in the adaptation layer header with the new UE ID; and
- Option 2: for those PDUs which are being transmitted or retransmitted, not updating the UE ID field in the adaptation layer header.

In accordance with an exemplary embodiment, after transmission or retransmission of adaptation layer PDU(s) by a transmitter (e.g., a remote UE, a relay UE, a gNB, etc.), a receiver (e.g., a relay UE, a gNB, a remote UE, etc.) may provide an early acknowledgement to the transmitter, indicating that the receiver has decoded successfully the adaptation layer headers of one or multiple received adaptation layer PDUs (but the complete PDUs are not received successfully yet). Based on this early acknowledgement, the transmitter can determine to update the UE ID field of those PDUs which are being transmitted or retransmitted.

In accordance with an exemplary embodiment, an execution time together with the new UE ID may be signaled to a node (e.g., a remote UE, a relay UE, a gNB etc.) for a concerned remote UE. This execution time may indicate the time when to apply the new UE ID for the concerned remote UE. In an embodiment, the node may apply the old UE ID for the concerned remote UE before the execution time. There may be several signaling alternatives as below for this execution time.
- Alternative 1: an absolute time field may be used to indicate the execution time.
- Alternative 2: a relative time field may be used to indicate the execution time. This field may be relative to the time when the node receives the signaling/message containing the new UE ID for the concerned remote UE, or when the node is aware of the new UE ID for the concerned remote UE, etc.

In accordance with an exemplary embodiment, as soon as a node (e.g., a remote UE, a relay UE, a gNB etc.) receives a reconfiguration message/signaling which carries a new UE ID for an adaptation layer for a concerned remote UE, the node may immediately apply the new UE ID after processing the reconfiguration message/signaling.

In accordance with an exemplary embodiment, as soon as a node (e.g., a remote UE, a relay UE, a gNB etc.) receives a reconfiguration message/signaling which carries a new UE ID for an adaptation layer for a concerned remote UE, the node may apply the new UE ID for the concerned remote UE after the node has transmitted all pending PDUs which contain the old UE ID for the concerned remote UE.

In accordance with an exemplary embodiment, every time when the remote UE is reconfigured with a new UE ID for an adaptation layer, the UE (e.g., the relay UE or the remote UE, etc.) and/or the gNB may keep both the old ID and the new ID for the concerned remote UE for a configured time period. During this time period, the UE and/or the gNB can process the received adaptation layer PDUs containing either the old ID or the new ID for the concerned remote UE.

In accordance with an exemplary embodiment, for a hop, the transmitting node (e.g., a remote UE, a relay UE, or a gNB) may apply a new UE ID in an adaptation layer for a concerned remote UE only in the case that the receiving node of the hop is also aware of the new UE ID for the concerned remote UE. In this case, the new UE ID for the concerned remote UE may also be signaled to the receiver node.

In accordance with an exemplary embodiment, a gNB may configure/reconfigure a new UE ID to a remote UE, and the new UE ID may be used in the adaptation layer. In an embodiment, the reconfiguration of the UE ID may be performed via at least one of the below signaling schemes.
- Scheme 1: the gNB may send a Uu RRC signaling to the remote UE for reconfiguring the UE ID. Upon reception of the RRC signaling, the remote UE may inform one or multiple relay UEs of its reconfigured UE ID. In the case that there are multiple relay UEs connecting to a concerned remote UE, after the remote UE obtains the new UE ID, the remote UE may inform all relay UEs of its new UE ID via PC5-RRC signaling.
- Scheme 2: the gNB may send a Uu RRC signaling to a relay UE of the concerned remote UE. The relay UE can read the RRC signaling and obtain the new UE ID for the concerned remote UE. After that, the relay UE may further signal the concerned remote UE of the new UE ID via PC5-RRC signaling. In the case that there are multiple relay UEs connecting to the concerned remote UE, the gNB may select any of the relay UE to send the Uu RRC signaling for reconfiguring a UE ID to the concerned remote UE. Alternatively or additionally, the gNB may select the relay UE with the strongest Uu connection to send the Uu signaling. After the remote UE obtains the new UE ID from the selected relay UE, the remote UE may inform the rest relay UEs of the new UE ID for the concerned remote UE via PC5-RRC signaling.

In the case of multiple hops, the remote UE (e.g., acting as a source end) may also distribute the new UE ID along the full path via signaling such as E2E RRC signaling, E2E MAC CE or E2E L1 signaling, so that every intermediate node on the path may also be aware of the new UE ID of the remote UE. In an embodiment, there may be at least one gNB involved in a multi-hop scenario. In this case, the gNB may also be responsible for signaling the new UE ID of the remote UE to any concerned UE on the path. Similarly, the new UE ID of the remote UE may also be further distributed upwards and/or downwards along the path.

In accordance with an exemplary embodiment, a relay UE may configure/reconfigure a new UE ID to a remote UE, and the new UE ID be used in the adaptation layer. In an embodiment, the relay UE may initially assign a UE ID to a remote UE during a discovery procedure or a PC5 link establishment procedure. After that, the relay UE may decide to reconfigure a new UE ID to a concerned remote UE at any time. According to an embodiment, the new UE ID may be informed to a gNB by the relay UE or by the remote UE via Uu RRC signaling.

In accordance with an exemplary embodiment, a remote UE may configure/reconfigure a new UE ID for the adaptation layer by itself. In an embodiment, the remote UE may decide to reconfigure its new UE ID at any time. According to an embodiment, the new UE ID may be informed to a gNB by the remote UE via Uu RRC signaling, and/or to a relay UE by the remote UE via PC5-RRC signaling.

In accordance with an exemplary embodiment, a new UE capability bit may be defined for a remote UE to indicate whether the remote UE can support reconfiguration of its UE ID for the adaptation layer. The reconfigured UE ID may be a global ID which may be known by the core network, or a local ID which may not be known by the core network. Alternatively or additionally, another new UE capability bit may be defined for a remote UE to indicate whether the remote UE can support to be configured with a local ID for the adaptation layer.

It is noted that some embodiments of the present disclosure are mainly described in relation to 4G/LTE or 5G/NR specifications being used as non-limiting examples for certain exemplary network configurations and system deployments. As such, the description of exemplary embodiments given herein specifically refers to terminology which is directly related thereto. Such terminology is only used in the context of the presented non-limiting examples and embodiments, and does naturally not limit the present disclosure in any way. Rather, any other system configuration or radio technologies may equally be utilized as long as exemplary embodiments described herein are applicable.

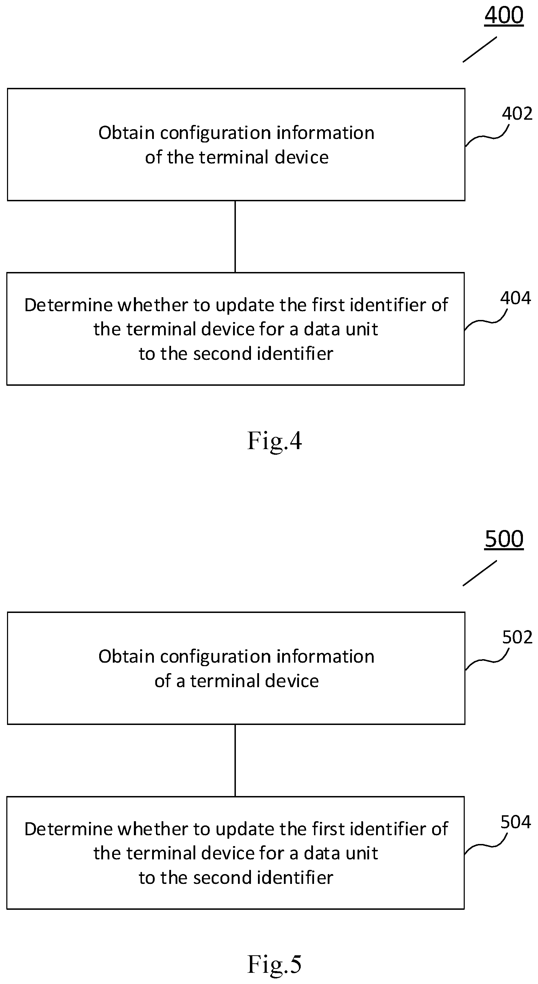

Fig.4 is a flowchart illustrating a method 400 according to some embodiments of the present disclosure. The method 400 illustrated in Fig.4 may be performed by a terminal device (e.g., a remote UE, etc.) or an apparatus communicatively coupled to the terminal device. In accordance with an exemplary embodiment, the terminal device may be configured to support D2D communication (e.g., V2X or SL communication, etc.) with other devices. In an exemplary embodiment, the terminal device may be configured to communicate with a network node (e.g., a gNB, etc.) directly or via a relay (e.g., the UE-to-UE relay, the UE-to-NW relay, etc.).

According to the exemplary method 400 illustrated in Fig.4, the terminal device may obtain configuration information of the terminal device, as shown in block 402. The configuration information may indicate that a first identifier of the terminal device for an adaptation layer is to be reconfigured to a second identifier of the terminal device for the adaptation layer. In accordance with an exemplary embodiment, the terminal device may determine whether to update the first identifier of the terminal device for a data unit (e.g., a PDU, etc.) to the second identifier, as shown in block 404. According to an embodiment, the first identifier of the terminal device for the data unit may be included in an adaptation layer header of the data unit.

In accordance with an exemplary embodiment, the terminal device may obtain the configuration information of the terminal device by generating the configuration information of the terminal device. In this case, the terminal device may configure/reconfigure a UE ID for the adaptation layer by itself. In accordance with another exemplary embodiment, the terminal device may obtain the configuration information of the terminal device by receiving the configuration information of the terminal device from a first node.

In accordance with an exemplary embodiment, the first node may be a base station (e.g., a gNB, etc.). In this case, the configuration information of the terminal device may be generated by the base station or a relay capable UE (e.g., a UE-to-NW relay UE, etc.).

In accordance with an exemplary embodiment, the first node may be a relay capable UE (e.g., a UE-to-NW relay UE, etc.). In this case, the configuration information of the terminal device may be generated by the relay capable UE, a base station or another relay capable UE.

In accordance with an exemplary embodiment, the terminal device may transmit the configuration information of the terminal device to a relay capable UE and/or a base station. According to an embodiment, the configuration information of the terminal device may be distributed to each intermediate node on an end-to-end path of the terminal device.

In accordance with an exemplary embodiment, the terminal device may determine to update the first identifier of the terminal device for the data unit to the second identifier, when the data unit is not being transmitted or retransmitted by the terminal device.

In accordance with an exemplary embodiment, the terminal device may determine not to update the first identifier of the terminal device for the data unit to the second identifier, when the data unit is being transmitted or retransmitted by the terminal device.

In accordance with an exemplary embodiment, the data unit is being transmitted or retransmitted to a second node (e.g., a relay capable UE or a base station, etc.) by the terminal device. In this case, the terminal device may receive an acknowledgement from the second node. The acknowledgement may indicate that at least part of the data unit is decoded successfully by the second node. In an embodiment, based on the acknowledgement, the terminal device may determine to update the first identifier of the terminal device for the data unit to the second identifier.

In accordance with an exemplary embodiment, the configuration information of the terminal device may further indicate an execution time when to update the first identifier of the terminal device for the data unit to the second identifier. According to an embodiment, the terminal device may determine to update the first identifier of the terminal device for the data unit to the second identifier before the execution time.

In accordance with an exemplary embodiment, the terminal device may determine to immediately update the first identifier of the terminal device for the data unit to the second identifier, after processing the configuration information.

In accordance with an exemplary embodiment, the terminal device may determine to update the first identifier of the terminal device for the data unit to the second identifier, after transmitting all pending data units (e.g., PDUs, etc.) which contain the first identifier of the terminal device for the adaptation layer.

In accordance with an exemplary embodiment, the terminal device may keep both the first identifier and the second identifier of the terminal device for a predetermined period of time.

In accordance with an exemplary embodiment, the terminal device may transmit or retransmit the data unit to a third node (e.g., a relay capable UE or a base station, etc.). In this case, the first identifier of the terminal device for the data unit may be updated to the second identifier, and the second identifier of the terminal device may be known by the third node.

In accordance with an exemplary embodiment, the terminal device may determine capability information (e.g., one or more capability bits, etc.) of the terminal device. The capability information may indicate: whether the terminal device supports reconfiguration of an identifier of the terminal device for the adaptation layer, and/or whether the terminal device supports to be configured with a local identifier for the adaptation layer.

In accordance with an exemplary embodiment, the terminal device may transmit the capability information of the terminal device to a base station and/or a relay capable UE.

Fig.5 is a flowchart illustrating a method 500 according to some embodiments of the present disclosure. The method 500 illustrated in Fig.5 may be performed by a first node (e.g., a relay capable UE, a base station, etc.) or an apparatus communicatively coupled to the first node. In accordance with an exemplary embodiment, the first node may be configured to support D2D communication (e.g., V2X or SL communication, etc.) with other devices. In accordance with another exemplary embodiment, the first node may be configured to provide services to one or more UEs (e.g., remote UEs, relay UEs, etc.).

According to the exemplary method 500 illustrated in Fig.5, the first node may obtain configuration information of a terminal device (e.g., the terminal device as described with respect to Fig.4), as shown in block 502. The configuration information may indicate that a first identifier of the terminal device for an adaptation layer is to be reconfigured to a second identifier of the terminal device for the adaptation layer. In accordance with an exemplary embodiment, the first node may determine whether to update the first identifier of the terminal device for a data unit (e.g., a PDU, etc.) to the second identifier, as shown in block 504. In an embodiment, the first identifier of the terminal device for the data unit may be included in an adaptation layer header of the data unit.

In accordance with an exemplary embodiment, the first node may obtain the configuration information of the terminal device by generating the configuration information of the terminal device. In accordance with another exemplary embodiment, the first node may obtain the configuration information of the terminal device by receiving the configuration information of the terminal device from a fourth node.

In accordance with an exemplary embodiment, the first node may be a relay capable UE, and the fourth node may be a base station, the terminal device or another relay capable UE. In this case, the configuration information of the terminal device may be generated by the base station, the terminal device or the another relay capable UE.

In accordance with an exemplary embodiment, the first node may be a base station, and the fourth node may be the terminal device or a relay capable UE. In this case, the configuration information of the terminal device may be generated by the terminal device or the relay capable UE.

In accordance with an exemplary embodiment, the first node may transmit the configuration information of the terminal device to the terminal device, a base station and/or a relay capable UE.

In accordance with an exemplary embodiment, the configuration information of the terminal device may be distributed to each intermediate node on an end-to-end path of the terminal device.

In accordance with an exemplary embodiment, the first node may keep both the first identifier and the second identifier of the terminal device for a predetermined period of time.

In accordance with an exemplary embodiment, the first node may determine to update the first identifier of the terminal device for the data unit to the second identifier, when the data unit is not being transmitted or retransmitted by the first node.

In accordance with an exemplary embodiment, the first node may determine not to update the first identifier of the terminal device for the data unit to the second identifier, when the data unit is being transmitted or retransmitted by the first node.

In accordance with an exemplary embodiment, the data unit is being transmitted or retransmitted to a fifth node (e.g., a remote UE, a relay capable UE or a base station, etc.) by the first node. In this case, the first node may receive an acknowledgement from the fifth node. The acknowledgement may indicate that at least part of the data unit is decoded successfully by the fifth node. In an embodiment, based on the acknowledgement, the first node may determine to update the first identifier of the terminal device for the data unit to the second identifier.

In accordance with an exemplary embodiment, the configuration information of the terminal device may further indicate an execution time when to update the first identifier of the terminal device for the data unit to the second identifier. According to an embodiment, the first node may determine to update the first identifier of the terminal device for the data unit to the second identifier before the execution time.

In accordance with an exemplary embodiment, the first node may determine to immediately update the first identifier of the terminal device for the data unit to the second identifier, after processing the configuration information.

In accordance with an exemplary embodiment, the first node may determine to update the first identifier of the terminal device for the data unit to the second identifier, after transmitting all pending data units (e.g., PDUs, etc.) which contain the first identifier of the terminal device for the adaptation layer.

In accordance with an exemplary embodiment, the first node may transmit or retransmit the data unit to a sixth node (e.g., a remote UE, a relay capable UE or a base station, etc.). In this case, the first identifier of the terminal device for the data unit may be updated to the second identifier, and the second identifier of the terminal device may be known by the sixth node.

In accordance with an exemplary embodiment, the first node may receive capability information (e.g., one or more capability bits, etc.) of the terminal device from the terminal device. The capability information may indicate: whether the terminal device supports reconfiguration of an identifier of the terminal device for the adaptation layer, and/or whether the terminal device supports to be configured with a local identifier for the adaptation layer.

The various blocks shown in Figs.4-5 may be viewed as method steps, and/or as operations that result from operation of computer program code, and/or as a plurality of coupled logic circuit elements constructed to carry out the associated function(s). The schematic flow chart diagrams described above are generally set forth as logical flow chart diagrams. As such, the depicted order and labeled steps are indicative of specific embodiments of the presented methods. Other steps and methods may be conceived that are equivalent in function, logic, or effect to one or more steps, or portions thereof, of the illustrated methods. Additionally, the order in which a particular method occurs may or may not strictly adhere to the order of the corresponding steps shown.

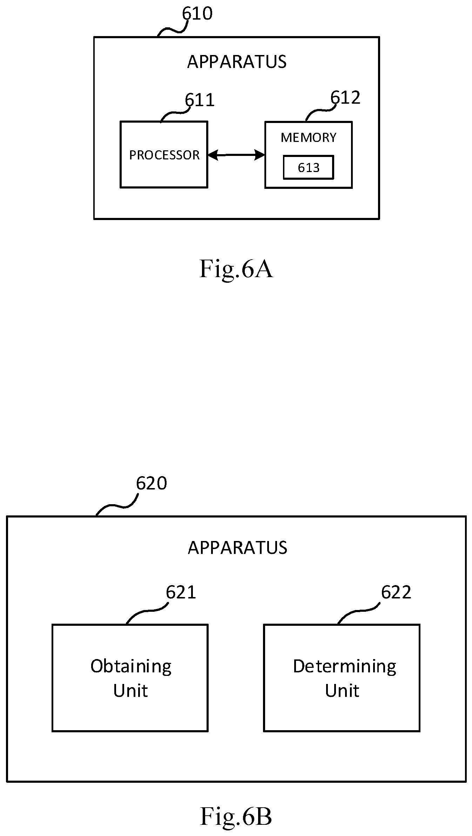

Fig.6A is a block diagram illustrating an apparatus 610 according to various embodiments of the present disclosure. As shown in Fig.6A, the apparatus 610 may comprise one or more processors such as processor 611 and one or more memories such as memory 612 storing computer program codes 613. The memory 612 may be non-transitory machine/processor/computer readable storage medium. In accordance with some exemplary embodiments, the apparatus 610 may be implemented as an integrated circuit chip or module that can be plugged or installed into a terminal device as described with respect to Fig.4, or a first node as described with respect to Fig.5. In such cases, the apparatus 610 may be implemented as a terminal device as described with respect to Fig.4, or a first node as described with respect to Fig.5.

In some implementations, the one or more memories 612 and the computer program codes 613 may be configured to, with the one or more processors 611, cause the apparatus 610 at least to perform any operation of the method as described in connection with Fig.4. In other implementations, the one or more memories 612 and the computer program codes 613 may be configured to, with the one or more processors 611, cause the apparatus 610 at least to perform any operation of the method as described in connection with Fig.5. Alternatively or additionally, the one or more memories 612 and the computer program codes 613 may be configured to, with the one or more processors 611, cause the apparatus 610 at least to perform more or less operations to implement the proposed methods according to the exemplary embodiments of the present disclosure.

Fig.6B is a block diagram illustrating an apparatus 620 according to some embodiments of the present disclosure. As shown in Fig.6B, the apparatus 620 may comprise an obtaining unit 621 and a determining unit 622. In an exemplary embodiment, the apparatus 620 may be implemented in a terminal device such as a remote UE. The obtaining unit 621 may be operable to carry out the operation in block 402, and the determining unit 622 may be operable to carry out the operation in block 404. In another exemplary embodiment, the apparatus 620 may be implemented in a first node such as a relay capable UE or a base station. The obtaining unit 621 may be operable to carry out the operation in block 502, and the determining unit 622 may be operable to carry out the operation in block 504. Optionally, the obtaining unit 621 and/or the determining unit 622 may be operable to carry out more or less operations to implement the proposed methods according to the exemplary embodiments of the present disclosure.

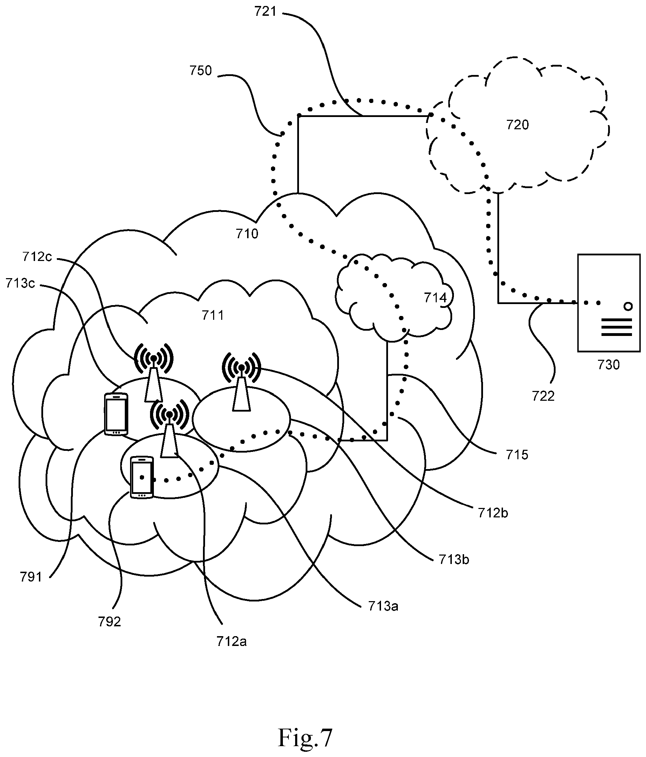

Fig.7 is a block diagram illustrating a telecommunication network connected via an intermediate network to a host computer in accordance with some embodiments of the present disclosure.

With reference to Fig.7, in accordance with an embodiment, a communication system includes a telecommunication network 710, such as a 3GPP-type cellular network, which comprises an access network 711, such as a radio access network, and a core network 714. The access network 711 comprises a plurality of base stations 712a, 712b, 712c, such as NBs, eNBs, gNBs or other types of wireless access points, each defining a corresponding coverage area 713a, 713b, 713c. Each base station 712a, 712b, 712c is connectable to the core network 714 over a wired or wireless connection 715. A first UE 791 located in a coverage area 713c is configured to wirelessly connect to, or be paged by, the corresponding base station 712c. A second UE 792 in a coverage area 713a is wirelessly connectable to the corresponding base station 712a. While a plurality of UEs 791, 792 are illustrated in this example, the disclosed embodiments are equally applicable to a situation where a sole UE is in the coverage area or where a sole UE is connecting to the corresponding base station 712.

The telecommunication network 710 is itself connected to a host computer 730, which may be embodied in the hardware and/or software of a standalone server, a cloud-implemented server, a distributed server or as processing resources in a server farm. The host computer 730 may be under the ownership or control of a service provider, or may be operated by the service provider or on behalf of the service provider. Connections 721 and 722 between the telecommunication network 710 and the host computer 730 may extend directly from the core network 714 to the host computer 730 or may go via an optional intermediate network 720. An intermediate network 720 may be one of, or a combination of more than one of, a public, private or hosted network; the intermediate network 720, if any, may be a backbone network or the Internet; in particular, the intermediate network 720 may comprise two or more sub-networks (not shown).

The communication system of Fig.7 as a whole enables connectivity between the connected UEs 791, 792 and the host computer 730. The connectivity may be described as an over-the-top (OTT) connection 750. The host computer 730 and the connected UEs 791, 792 are configured to communicate data and/or signaling via the OTT connection 750, using the access network 711, the core network 714, any intermediate network 720 and possible further infrastructure (not shown) as intermediaries. The OTT connection 750 may be transparent in the sense that the participating communication devices through which the OTT connection 750 passes are unaware of routing of uplink and downlink communications. For example, the base station 712 may not or need not be informed about the past routing of an incoming downlink communication with data originating from the host computer 730 to be forwarded (e.g., handed over) to a connected UE 791. Similarly, the base station 712 need not be aware of the future routing of an outgoing uplink communication originating from the UE 791 towards the host computer 730.

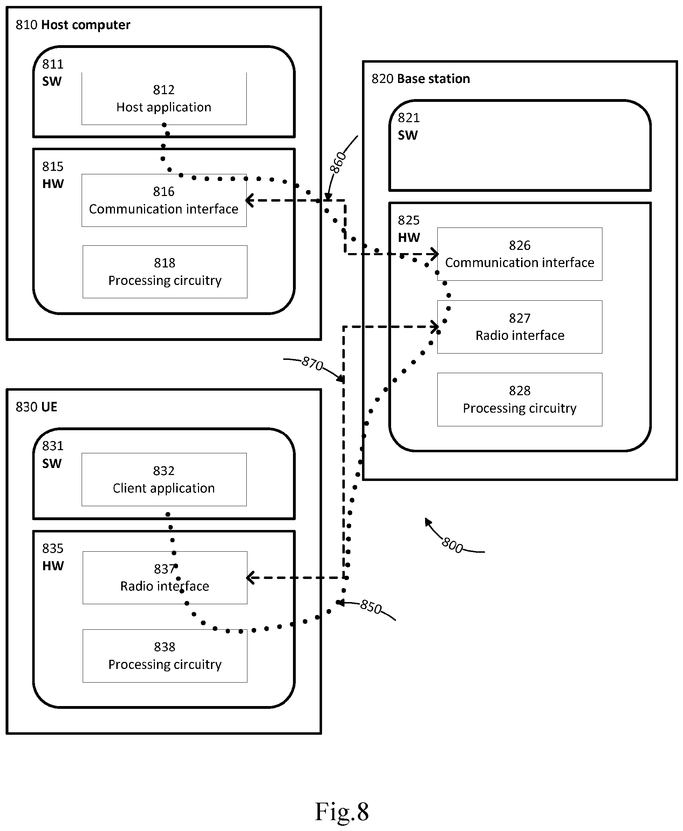

Fig.8 is a block diagram illustrating a host computer communicating via a base station with a UE over a partially wireless connection in accordance with some embodiments of the present disclosure.

Example implementations, in accordance with an embodiment, of the UE, base station and host computer discussed in the preceding paragraphs will now be described with reference to Fig.8. In a communication system 800, a host computer 810 comprises hardware 815 including a communication interface 816 configured to set up and maintain a wired or wireless connection with an interface of a different communication device of the communication system 800. The host computer 810 further comprises a processing circuitry 818, which may have storage and/or processing capabilities. In particular, the processing circuitry 818 may comprise one or more programmable processors, application-specific integrated circuits, field programmable gate arrays or combinations of these (not shown) adapted to execute instructions. The host computer 810 further comprises software 811, which is stored in or accessible by the host computer 810 and executable by the processing circuitry 818. The software 811 includes a host application 812. The host application 812 may be operable to provide a service to a remote user, such as UE 830 connecting via an OTT connection 850 terminating at the UE 830 and the host computer 810. In providing the service to the remote user, the host application 812 may provide user data which is transmitted using the OTT connection 850.

The communication system 800 further includes a base station 820 provided in a telecommunication system and comprising hardware 825 enabling it to communicate with the host computer 810 and with the UE 830. The hardware 825 may include a communication interface 826 for setting up and maintaining a wired or wireless connection with an interface of a different communication device of the communication system 800, as well as a radio interface 827 for setting up and maintaining at least a wireless connection 870 with the UE 830 located in a coverage area (not shown in Fig.8) served by the base station 820. The communication interface 826 may be configured to facilitate a connection 860 to the host computer 810. The connection 860 may be direct or it may pass through a core network (not shown in Fig.8) of the telecommunication system and/or through one or more intermediate networks outside the telecommunication system. In the embodiment shown, the hardware 825 of the base station 820 further includes a processing circuitry 828, which may comprise one or more programmable processors, application-specific integrated circuits, field programmable gate arrays or combinations of these (not shown) adapted to execute instructions. The base station 820 further has software 821 stored internally or accessible via an external connection.

The communication system 800 further includes the UE 830 already referred to. Its hardware 835 may include a radio interface 837 configured to set up and maintain a wireless connection 870 with a base station serving a coverage area in which the UE 830 is currently located. The hardware 835 of the UE 830 further includes a processing circuitry 838, which may comprise one or more programmable processors, application-specific integrated circuits, field programmable gate arrays or combinations of these (not shown) adapted to execute instructions. The UE 830 further comprises software 831, which is stored in or accessible by the UE 830 and executable by the processing circuitry 838. The software 831 includes a client application 832. The client application 832 may be operable to provide a service to a human or non-human user via the UE 830, with the support of the host computer 810. In the host computer 810, an executing host application 812 may communicate with the executing client application 832 via the OTT connection 850 terminating at the UE 830 and the host computer 810. In providing the service to the user, the client application 832 may receive request data from the host application 812 and provide user data in response to the request data. The OTT connection 850 may transfer both the request data and the user data. The client application 832 may interact with the user to generate the user data that it provides.

It is noted that the host computer 810, the base station 820 and the UE 830 illustrated in Fig.8 may be similar or identical to the host computer 730, one of base stations 712a, 712b, 712c and one of UEs 791, 792 of Fig.7, respectively. This is to say, the inner workings of these entities may be as shown in Fig.8 and independently, the surrounding network topology may be that of Fig.7.

In Fig.8, the OTT connection 850 has been drawn abstractly to illustrate the communication between the host computer 810 and the UE 830 via the base station 820, without explicit reference to any intermediary devices and the precise routing of messages via these devices. Network infrastructure may determine the routing, which it may be configured to hide from the UE 830 or from the service provider operating the host computer 810, or both. While the OTT connection 850 is active, the network infrastructure may further take decisions by which it dynamically changes the routing (e.g., on the basis of load balancing consideration or reconfiguration of the network).

Wireless connection 870 between the UE 830 and the base station 820 is in accordance with the teachings of the embodiments described throughout this disclosure. One or more of the various embodiments improve the performance of OTT services provided to the UE 830 using the OTT connection 850, in which the wireless connection 870 forms the last segment. More precisely, the teachings of these embodiments may improve the latency and the power consumption, and thereby provide benefits such as lower complexity, reduced time required to access a cell, better responsiveness, extended battery lifetime, etc.

A measurement procedure may be provided for the purpose of monitoring data rate, latency and other factors on which the one or more embodiments improve. There may further be an optional network functionality for reconfiguring the OTT connection 850 between the host computer 810 and the UE 830, in response to variations in the measurement results. The measurement procedure and/or the network functionality for reconfiguring the OTT connection 850 may be implemented in software 811 and hardware 815 of the host computer 810 or in software 831 and hardware 835 of the UE 830, or both. In embodiments, sensors (not shown) may be deployed in or in association with communication devices through which the OTT connection 850 passes; the sensors may participate in the measurement procedure by supplying values of the monitored quantities exemplified above, or supplying values of other physical quantities from which the software 811, 831 may compute or estimate the monitored quantities. The reconfiguring of the OTT connection 850 may include message format, retransmission settings, preferred routing etc.; the reconfiguring need not affect the base station 820, and it may be unknown or imperceptible to the base station 820. Such procedures and functionalities may be known and practiced in the art. In certain embodiments, measurements may involve proprietary UE signaling facilitating the host computer 810's measurements of throughput, propagation times, latency and the like. The measurements may be implemented in that the software 811 and 831 causes messages to be transmitted, in particular empty or 'dummy' messages, using the OTT connection 850 while it monitors propagation times, errors etc.

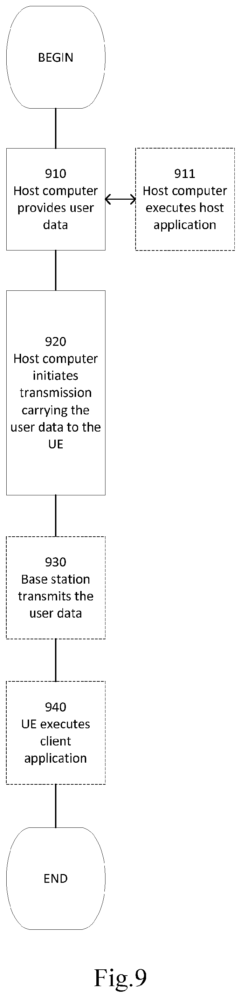

Fig.9 is a flowchart illustrating a method implemented in a communication system, in accordance with an embodiment. The communication system includes a host computer, a base station and a UE which may be those described with reference to Fig.7 and Fig.8. For simplicity of the present disclosure, only drawing references to Fig.9 will be included in this section. In step 910, the host computer provides user data. In substep 911 (which may be optional) of step 910, the host computer provides the user data by executing a host application. In step 920, the host computer initiates a transmission carrying the user data to the UE. In step 930 (which may be optional), the base station transmits to the UE the user data which was carried in the transmission that the host computer initiated, in accordance with the teachings of the embodiments described throughout this disclosure. In step 940 (which may also be optional), the UE executes a client application associated with the host application executed by the host computer.

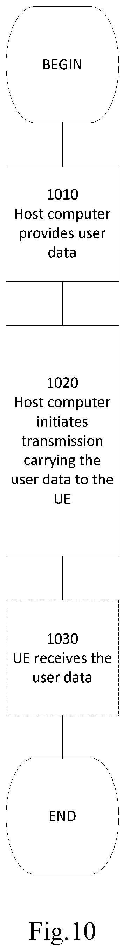

Fig.10 is a flowchart illustrating a method implemented in a communication system, in accordance with an embodiment. The communication system includes a host computer, a base station and a UE which may be those described with reference to Fig.7 and Fig.8. For simplicity of the present disclosure, only drawing references to Fig.10 will be included in this section. In step 1010 of the method, the host computer provides user data. In an optional substep (not shown) the host computer provides the user data by executing a host application. In step 1020, the host computer initiates a transmission carrying the user data to the UE. The transmission may pass via the base station, in accordance with the teachings of the embodiments described throughout this disclosure. In step 1030 (which may be optional), the UE receives the user data carried in the transmission.

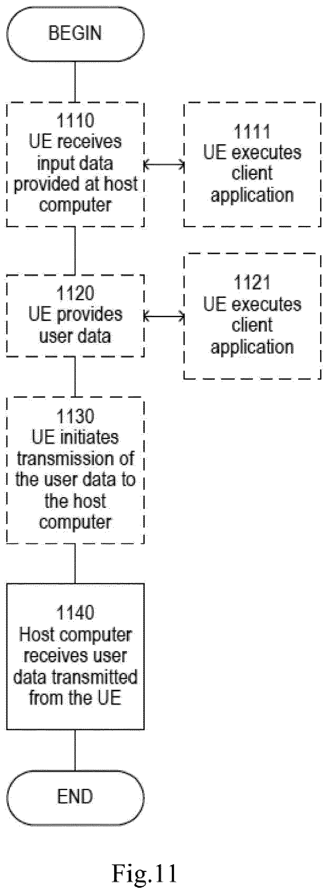

Fig.11 is a flowchart illustrating a method implemented in a communication system, in accordance with an embodiment. The communication system includes a host computer, a base station and a UE which may be those described with reference to Fig.7 and Fig.8. For simplicity of the present disclosure, only drawing references to Fig.11 will be included in this section. In step 1110 (which may be optional), the UE receives input data provided by the host computer. Additionally or alternatively, in step 1120, the UE provides user data. In substep 1121 (which may be optional) of step 1120, the UE provides the user data by executing a client application. In substep 1111 (which may be optional) of step 1110, the UE executes a client application which provides the user data in reaction to the received input data provided by the host computer. In providing the user data, the executed client application may further consider user input received from the user. Regardless of the specific manner in which the user data was provided, the UE initiates, in substep 1130 (which may be optional), transmission of the user data to the host computer. In step 1140 of the method, the host computer receives the user data transmitted from the UE, in accordance with the teachings of the embodiments described throughout this disclosure.

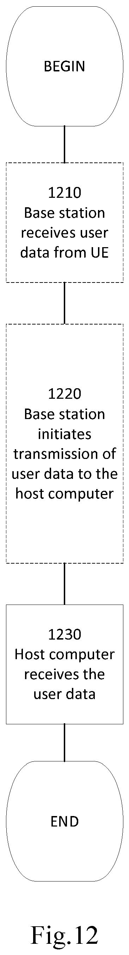

Fig.12 is a flowchart illustrating a method implemented in a communication system, in accordance with an embodiment. The communication system includes a host computer, a base station and a UE which may be those described with reference to Fig.7 and Fig.8. For simplicity of the present disclosure, only drawing references to Fig.12 will be included in this section. In step 1210 (which may be optional), in accordance with the teachings of the embodiments described throughout this disclosure, the base station receives user data from the UE. In step 1220 (which may be optional), the base station initiates transmission of the received user data to the host computer. In step 1230 (which may be optional), the host computer receives the user data carried in the transmission initiated by the base station.

According to some exemplary embodiments, there is provided a method implemented in a communication system which may include a host computer, a base station and a UE. The method may comprise providing user data at the host computer. Optionally, the method may comprise, at the host computer, initiating a transmission carrying the user data to the UE via a cellular network comprising the base station which may perform any step of the exemplary method 500 as describe with respect to Fig.5.

According to some exemplary embodiments, there is provided a communication system including a host computer. The host computer may comprise processing circuitry configured to provide user data, and a communication interface configured to forward the user data to a cellular network for transmission to a UE. The cellular network may comprise a base station having a radio interface and processing circuitry. The base station's processing circuitry may be configured to perform any step of the exemplary method 500 as describe with respect to Fig.5.

According to some exemplary embodiments, there is provided a method implemented in a communication system which may include a host computer, a base station and a UE. The method may comprise providing user data at the host computer. Optionally, the method may comprise, at the host computer, initiating a transmission carrying the user data to the UE via a cellular network comprising the base station. The UE may perform any step of the exemplary method 400 as describe with respect to Fig.4.

According to some exemplary embodiments, there is provided a communication system including a host computer. The host computer may comprise processing circuitry configured to provide user data, and a communication interface configured to forward user data to a cellular network for transmission to a UE. The UE may comprise a radio interface and processing circuitry. The UE's processing circuitry may be configured to perform any step of the exemplary method 400 as describe with respect to Fig.4.

According to some exemplary embodiments, there is provided a method implemented in a communication system which may include a host computer, a base station and a UE. The method may comprise, at the host computer, receiving user data transmitted to the base station from the UE which may perform any step of the exemplary method 400 as describe with respect to Fig.4.

According to some exemplary embodiments, there is provided a communication system including a host computer. The host computer may comprise a communication interface configured to receive user data originating from a transmission from a UE to a base station. The UE may comprise a radio interface and processing circuitry. The UE's processing circuitry may be configured to perform any step of the exemplary method 400 as describe with respect to Fig.4.

According to some exemplary embodiments, there is provided a method implemented in a communication system which may include a host computer, a base station and a UE. The method may comprise, at the host computer, receiving, from the base station, user data originating from a transmission which the base station has received from the UE. The base station may perform any step of the exemplary method 500 as describe with respect to Fig.5.

According to some exemplary embodiments, there is provided a communication system which may include a host computer. The host computer may comprise a communication interface configured to receive user data originating from a transmission from a UE to a base station. The base station may comprise a radio interface and processing circuitry. The base station's processing circuitry may be configured to perform any step of the exemplary method 500 as describe with respect to Fig.5.

In general, the various exemplary embodiments may be implemented in hardware or special purpose chips, circuits, software, logic or any combination thereof. For example, some aspects may be implemented in hardware, while other aspects may be implemented in firmware or software which may be executed by a controller, microprocessor or other computing device, although the disclosure is not limited thereto. While various aspects of the exemplary embodiments of this disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As such, it should be appreciated that at least some aspects of the exemplary embodiments of the disclosure may be practiced in various components such as integrated circuit chips and modules. It should thus be appreciated that the exemplary embodiments of this disclosure may be realized in an apparatus that is embodied as an integrated circuit, where the integrated circuit may comprise circuitry (as well as possibly firmware) for embodying at least one or more of a data processor, a digital signal processor, baseband circuitry and radio frequency circuitry that are configurable so as to operate in accordance with the exemplary embodiments of this disclosure.

It should be appreciated that at least some aspects of the exemplary embodiments of the disclosure may be embodied in computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, random access memory (RAM), etc. As will be appreciated by one of skill in the art, the function of the program modules may be combined or distributed as desired in various embodiments. In addition, the function may be embodied in whole or partly in firmware or hardware equivalents such as integrated circuits, field programmable gate arrays (FPGA), and the like.

The present disclosure includes any novel feature or combination of features disclosed herein either explicitly or any generalization thereof. Various modifications and adaptations to the foregoing exemplary embodiments of this disclosure may become apparent to those skilled in the relevant arts in view of the foregoing description, when read in conjunction with the accompanying drawings. However, any and all modifications will still fall within the scope of the non-limiting and exemplary embodiments of this disclosure.

## Claims

1. A method (400) performed by a terminal device, comprising:
obtaining (402) configuration information of the terminal device, wherein the configuration information indicates that a first identifier of the terminal device for an adaptation layer is to be reconfigured to a second identifier of the terminal device for the adaptation layer; and
determining (404) whether to update the first identifier of the terminal device for a data unit to the second identifier.

2. The method according to claim 1, wherein the first identifier of the terminal device for the data unit is included in an adaptation layer header of the data unit.

3. The method according to claim 1 or 2, wherein obtaining the configuration information of the terminal device comprises:
receiving the configuration information of the terminal device from a first node;
wherein the first node is a base station and the configuration information of the terminal device is generated by the base station or a relay capable user equipment; or wherein the first node is a relay capable user equipment and the configuration information of the terminal device is generated by the relay capable user equipment, a base station or another relay capable user equipment.

4. The method according to any of claims 1-3, wherein the configuration information of the terminal device is distributed to each intermediate node on an end-to-end path of the terminal device.

5. The method according to any of claims 1-4, wherein the terminal device determines to update the first identifier of the terminal device for the data unit to the second identifier, when the data unit is not being transmitted or retransmitted by the terminal device; and/or wherein the terminal device determines not to update the first identifier of the terminal device for the data unit to the second identifier, when the data unit is being transmitted or retransmitted by the terminal device.

6. The method according to any of claims 1-5, wherein the data unit is being transmitted or retransmitted to a second node by the terminal device, and the method further comprises:
receiving an acknowledgement from the second node, wherein the acknowledgement indicates that at least part of the data unit is decoded successfully by the second node;
and the terminal device determines, based on the acknowledgement, to update the first identifier of the terminal device for the data unit to the second identifier.

7. The method according to any of claims 1-6, wherein the configuration information of the terminal device further indicates an execution time when to update the first identifier of the terminal device for the data unit to the second identifier and the terminal device determines to update the first identifier of the terminal device for the data unit to the second identifier before the execution time; or wherein the terminal device determines to immediately update the first identifier of the terminal device for the data unit to the second identifier, after processing the configuration information.

8. The method according to any of claims 1-7, wherein the terminal device determines to update the first identifier of the terminal device for the data unit to the second identifier, after transmitting all pending data units which contain the first identifier of the terminal device for the adaptation layer.

9. The method according to any of claims 1-8, further comprising:
transmitting or retransmitting the data unit to a third node, wherein the first identifier of the terminal device for the data unit is updated to the second identifier, and the second identifier of the terminal device is known by the third node.

10. The method according to any of claims 1-9, further comprising:
determining capability information of the terminal device, wherein the capability information indicates: whether the terminal device supports reconfiguration of an identifier of the terminal device for the adaptation layer, and/or whether the terminal device supports to be configured with a local identifier for the adaptation layer;
transmitting the capability information of the terminal device to a base station and/or a relay capable user equipment.

11. A terminal device (610), comprising:
one or more processors (611); and
one or more memories (612) comprising computer program codes (613),
the one or more memories (612) and the computer program codes (613) configured to, with the one or more processors (611), cause the terminal device (610) at least to perform the method according to any one of claims 1-10.

12. A method (500) performed by a first node, comprising:
obtaining (502) configuration information of a terminal device, wherein the configuration information indicates that a first identifier of the terminal device for an adaptation layer is to be reconfigured to a second identifier of the terminal device for the adaptation layer; and
determining (504) whether to update the first identifier of the terminal device for a data unit to the second identifier;
wherein the first node is a base station or a relay capable user equipment.

13. The method according to claim 12, wherein obtaining the configuration information of the terminal device comprises:
generating the configuration information of the terminal device by the first node;
or receiving the configuration information of the terminal device from a fourth node.

14. The method according to claim 13, wherein the first node is a relay capable user equipment and the fourth node is a base station, the terminal device or another relay capable user equipment; or the first node is a base station, and the fourth node is the terminal device or a relay capable user equipment.

15. The method according to any of claims 12-14, further comprising:
transmitting the configuration information of the terminal device to the terminal device, a base station and/or a relay capable user equipment.

## Patentansprüche

1. Verfahren (400), das von einer Endgerätevorrichtung durchgeführt wird und Folgendes umfasst:
Erhalten (402) von Konfigurationsinformationen der Endgerätevorrichtung, wobei die Konfigurationsinformationen angeben, dass eine erste Kennung der Endgerätevorrichtung für eine Anpassungsschicht in eine zweite Kennung der Endgerätevorrichtung für die Anpassungsschicht rekonfiguriert werden soll; und
Bestimmen (404), ob die erste Kennung der Endgerätevorrichtung für eine Dateneinheit auf die zweite Kennung aktualisiert werden soll.

2. Verfahren nach Anspruch 1, wobei die erste Kennung der Endgerätevorrichtung für die Dateneinheit in einem Anpassungsschicht-Header der Dateneinheit umfasst ist.

3. Verfahren nach Anspruch 1 oder 2, wobei das Erhalten der Konfigurationsinformationen der Endgerätevorrichtung Folgendes umfasst:
Empfangen der Konfigurationsinformationen der Endgerätevorrichtung von einem ersten Knoten;
wobei der erste Knoten eine Basisstation ist und die Konfigurationsinformationen der Endgerätevorrichtung von der Basisstation oder einer relaisfähigen Benutzereinrichtung erzeugt werden; oder wobei der erste Knoten eine relaisfähige Benutzereinrichtung ist und die Konfigurationsinformationen der Endgerätevorrichtung von der relaisfähigen Benutzereinrichtung, einer Basisstation oder einer anderen relaisfähigen Benutzereinrichtung erzeugt werden.

4. Verfahren nach einem der Ansprüche 1-3, wobei die Konfigurationsinformationen der Endgerätevorrichtung an jeden Zwischenknoten auf einem Ende-zu-Ende-Pfad der Endgerätevorrichtung verteilt werden.

5. Verfahren nach einem der Ansprüche 1-4, wobei die Endgerätevorrichtung bestimmt, die erste Kennung der Endgerätevorrichtung für die Dateneinheit auf die zweite Kennung zu aktualisieren, wenn die Dateneinheit von der Endgerätevorrichtung nicht geendet oder erneut gesendet wird; und/oder wobei die erste Kennung der Endgerätevorrichtung bestimmt, die erste Kennung der Endgerätevorrichtung für die Dateneinheit nicht auf die zweite Kennung zu aktualisieren, wenn die Dateneinheit von der Endgerätevorrichtung gesendet oder erneut gesendet wird.

6. Verfahren nach einem der Ansprüche 1-5, wobei die Dateneinheit von der Endgerätevorrichtung an einen zweiten Knoten gesendet oder erneut gesendet wird, und das Verfahren ferner Folgendes umfasst:
Empfangen einer Bestätigung von dem zweiten Knoten, wobei die Bestätigung angibt, dass mindestens ein Teil der Dateneinheit von dem zweiten Knoten erfolgreich decodiert wird;
und die Endgerätevorrichtung basierend auf der Bestätigung bestimmt, die erste Kennung der Endgerätevorrichtung für eine Dateneinheit auf die zweite Kennung zu aktualisieren.

7. Verfahren nach der Ansprüche 1-6 wobei die Konfigurationsinformationen der Endgerätevorrichtung ferner eine Ausführungszeit angeben, wann die erste Kennung der Endgerätevorrichtung für die Dateneinheit auf die zweite Kennung aktualisiert werden soll, und die Endgerätevorrichtung bestimmt, die erste Kennung der Endgerätevorrichtung für die Dateneinheit vor der Ausführungszeit auf die zweite Kennung zu aktualisieren; oder wobei die Endgerätevorrichtung nach dem Verarbeiten der Konfigurationsinformationen bestimmt, die erste Kennung der Endgerätevorrichtung für die Dateneinheit sofort auf die zweite Kennung zu aktualisieren.

8. Verfahren nach der Ansprüche 1-7, wobei die Endgerätevorrichtung bestimmt, die erste Kennung der Endgerätevorrichtung für die Dateneinheit nach dem Senden aller anhängigen Dateneinheiten, die die erste Kennung der Endgerätevorrichtung für die Anpassungsschicht enthalten, auf die zweite Kennung zu aktualisieren

9. Verfahren nach einem der Ansprüche 1-8, ferner umfassend:
Senden oder erneutes Senden der Dateneinheit an einen dritten Knoten, wobei die erste Kennung der Endgerätevorrichtung für die Dateneinheit auf die zweite Kennung aktualisiert wird und die zweite Kennung der Endgerätevorrichtung dem dritten Knoten bekannt ist.

10. Verfahren nach einem der Ansprüche 1-9, ferner umfassend:
Bestimmen von Fähigkeitsinformationen der Endgerätevorrichtung, wobei die Fähigkeitsinformationen Folgendes angeben: ob die Endgerätevorrichtung Rekonfiguration einer Kennung der Endgerätevorrichtung für die Anpassungsschicht unterstützt und/oder ob die Endgerätevorrichtung unterstützt, mit einer lokalen Kennung für die Anpassungsschicht konfiguriert zu werden;
Senden der Fähigkeitsinformationen der Endgerätevorrichtung an eine Basisstation und/oder eine relaisfähigen Benutzereinrichtung.

11. Endgerätevorrichtung (610), umfassend:
einen oder mehrere Prozessoren (611); und
einen oder mehrere Speicher (612), die Computerprogrammcodes (613) umfassen,
wobei der eine oder die mehreren Speicher (612) und die Computerprogrammcodes (613) so konfiguriert sind, dass sie mit dem einen oder den mehreren Prozessoren (611) die Endgerätevorrichtung (610) zumindest zum Durchführen des Verfahrens nach einem der Ansprüche 1-10 veranlassen.

12. Verfahren (500), das von einem ersten Knoten durchgeführt wird und Folgendes umfasst:
Erhalten (502) von Konfigurationsinformationen einer Endgerätevorrichtung, wobei die Konfigurationsinformationen angeben, dass eine erste Kennung der Endgerätevorrichtung für eine Anpassungsschicht in eine zweite Kennung der Endgerätevorrichtung für die Anpassungsschicht rekonfiguriert werden soll; und
Bestimmen (504), ob die erste Kennung der Endgerätevorrichtung für eine Dateneinheit auf die zweite Kennung aktualisiert werden soll.
wobei der erste Knoten eine Basisstation oder eine relaisfähige Benutzereinrichtung ist.

13. Verfahren nach Anspruch 12, wobei das Erhalten der Konfigurationsinformationen der Endgerätevorrichtung Folgendes umfasst:
Erzeugen der Konfigurationsinformationen der Endgerätevorrichtung durch den ersten Knoten;
oder Empfangen der Konfigurationsinformationen der Endgerätevorrichtung von einem vierten Knoten.

14. Verfahren nach Anspruch 13, wobei der erste Knoten eine relaisfähige Benutzereinrichtung ist und der vierte Knoten eine Basisstation, die Endgerätevorrichtung oder eine andere relaisfähige Benutzereinrichtung ist; oder der erste Knoten eine Basisstation ist und der vierte Knoten die Endgerätevorrichtung oder eine relaisfähige Benutzereinrichtung ist.

15. Verfahren nach einem der Ansprüche 12-14, ferner umfassend:
Senden der Konfigurationsinformationen der Endgerätevorrichtung an die Endgerätevorrichtung, eine Basisstation und/oder eine relaisfähige Benutzereinrichtung.

## Revendications

1. Procédé (400) réalisé par un dispositif terminal, comprenant :
l'obtention (402) d'informations de configuration du dispositif terminal, dans lequel les informations de configuration indiquent qu'un premier identifiant du dispositif terminal pour une couche d'adaptation doit être reconfiguré en un deuxième identifiant du dispositif terminal pour la couche d'adaptation ; et
la détermination (404) s'il faut ou non mettre à jour le premier identifiant du dispositif terminal pour une unité de données au deuxième identifiant.

2. Procédé selon la revendication 1, dans lequel le premier identifiant du dispositif terminal pour l'unité de données est inclus dans un en-tête de couche d'adaptation de l'unité de données.

3. Procédé selon la revendication 1 ou 2, dans lequel l'obtention des informations de configuration du dispositif terminal comprend :
la réception des informations de configuration du dispositif terminal depuis un premier nœud ;
dans lequel le premier nœud est une station de base et les informations de configuration du dispositif terminal sont générées par la station de base ou un équipement utilisateur à capacité de relais ; ou dans lequel le premier nœud est un équipement utilisateur à capacité de relais et les informations de configuration du dispositif terminal sont générées par l'équipement utilisateur à capacité de relais, une station de base ou un autre équipement utilisateur à capacité de relais.

4. Procédé selon l'une quelconque des revendications 1 à 3, dans lequel les informations de configuration du dispositif terminal sont distribuées à chaque nœud intermédiaire sur un trajet de bout en bout du dispositif terminal.

5. Procédé selon l'une quelconque des revendications 1 à 4, dans lequel le dispositif terminal détermine de mettre à jour le premier identifiant du dispositif terminal pour l'unité de données au deuxième identifiant, lorsque l'unité de données n'est pas en cours de transmission ou de retransmission par le dispositif terminal ; et/ou dans lequel le dispositif terminal détermine de ne pas mettre à jour le premier identifiant du dispositif terminal pour l'unité de données au deuxième identifiant, lorsque l'unité de données est en cours de transmission ou de retransmission par le dispositif terminal.

6. Procédé selon l'une quelconque des revendications 1 à 5, dans lequel l'unité de données est en cours de transmission ou de retransmission à un deuxième nœud par le dispositif terminal, et le procédé comprend en outre :
la réception d'un accusé de réception depuis le deuxième nœud, dans lequel l'accusé de réception indique qu'au moins une partie de l'unité de données est décodée avec succès par le deuxième nœud ;
et le dispositif terminal détermine, sur la base de l'accusé de réception, de mettre à jour le premier identifiant du dispositif terminal pour l'unité de données au deuxième identifiant.

7. Procédé selon l'une quelconque des revendications 1 à 6, dans lequel les informations de configuration du dispositif terminal indiquent en outre un temps d'exécution auquel mettre à jour le premier identifiant du dispositif terminal pour l'unité de données au deuxième identifiant et le dispositif terminal détermine de mettre à jour le premier identifiant du dispositif terminal pour l'unité de données au deuxième identifiant avant le temps d'exécution ; ou dans lequel le dispositif terminal détermine de mettre à jour le premier identifiant du dispositif terminal pour l'unité de données au deuxième identifiant immédiatement après le traitement des informations de configuration.

8. Procédé selon l'une quelconque des revendications 1 à 7, dans lequel le dispositif terminal détermine de mettre à jour le premier identifiant du dispositif terminal pour l'unité de données au deuxième identifiant, après la transmission de toutes les unités de données en attente qui contiennent le premier identifiant du dispositif terminal pour la couche d'adaptation.

9. Procédé selon l'une quelconque des revendications 1 à 8, comprenant en outre :
la transmission ou la retransmission de l'unité de données à un troisième nœud, dans lequel le premier identifiant du dispositif terminal pour l'unité de données est mis à jour au deuxième identifiant, et le deuxième identifiant du dispositif terminal est connu par le troisième nœud.

10. Procédé selon l'une quelconque des revendications 1 à 9, comprenant en outre :
la détermination d'informations de capacité du dispositif terminal, dans lequel les informations de capacité indiquent : si le dispositif terminal prend en charge une reconfiguration d'un identifiant du dispositif terminal pour la couche d'adaptation, et/ou si le dispositif terminal prend en charge d'être configuré avec un identifiant local pour la couche d'adaptation ;
la transmission des informations de capacité du dispositif terminal à une station de base et/ou à un équipement utilisateur à capacité de relais.

11. Dispositif terminal (610), comprenant :
un ou plusieurs processeurs (611) ; et
une ou plusieurs mémoires (612) comprenant des codes de programmes informatiques (613),
les une ou plusieurs mémoires (612) et les codes de programmes informatiques (613) étant configurés pour, avec les un ou plusieurs processeurs (611), amener le dispositif terminal (610) au moins à réaliser le procédé selon l'une quelconque des revendications 1 à 10.

12. Procédé (500) réalisé par un premier nœud, comprenant :
l'obtention (502) d'informations de configuration d'un dispositif terminal, dans lequel les informations de configuration indiquent qu'un premier identifiant du dispositif terminal pour une couche d'adaptation doit être reconfiguré en un deuxième identifiant du dispositif terminal pour la couche d'adaptation ; et la détermination (504) s'il faut ou non mettre à jour le premier identifiant du dispositif terminal pour une unité de données au deuxième identifiant,
dans lequel le premier nœud est une station de base ou un équipement utilisateur à capacité de relais.

13. Procédé selon la revendication 12, dans lequel l'obtention des informations de configuration du dispositif terminal comprend :
la génération des informations de configuration du dispositif terminal par le premier nœud ;
ou la réception des informations de configuration du dispositif terminal depuis un quatrième nœud.

14. Procédé selon la revendication 13, dans lequel le premier nœud est un équipement utilisateur à capacité de relais et le quatrième nœud est une station de base, le dispositif terminal ou un autre équipement utilisateur à capacité de relais ; ou le premier nœud est une station de base, et le quatrième nœud est le dispositif terminal ou un équipement utilisateur à capacité de relais.

15. Procédé selon l'une quelconque des revendications 12 à 14, comprenant en outre :
la transmission des informations de configuration du dispositif terminal au dispositif terminal, à une station de base et/ou à un équipement utilisateur à capacité de relais.
